# EUROPÄISCHE PATENTSCHRIFT

(11) **EP 3 478 636 B1**
(45) Veröffentlichungstag und Bekanntmachung des Hinweises auf die Patenterteilung: **20.01.2021**
(21) Anmeldenummer: 17740310.2
(22) Anmeldetag: 30.06.2017
(51) Int. Cl.: C02F 1/467, C02F 101/20

(54) **VERFAHREN ZUR BEHANDLUNG VON GEOTHERMALFLUID- ODER FORMATIONSWASSERSTRÖMEN DURCH KONTINUIERLICHE ELEKTROCHEMISCHE ABTRENNUNG REDUZIERBARER METALL- UND / ODER METALLOIDIONEN AUS DEM FÖRDERSTROM**
METHOD OF TREATMENT OF GEOTHERMAL FLUID OR FORMATION WATER STREAMS BY CONTINUOUS ELECTROCHEMICAL REMOVAL OF REDUCIBLE METAL AND/OR METALLOID IONS FROM THE PRODUCTION STREAM
PROCÉDÉ DE TRAITEMENT DE FLUX DE FLUIDE GÉOTHERMIQUE OU D'EAU DE FORMATION PAR SÉPARATION ÉLECTROCHIMIQUE CONTINUE HORS DU FLUX DE TRANSPORT, D'IONS MÉTALLIQUES ET/OU MÉTALLOÏDES POUVANT ÊTRE RÉDUITS

(30) Priorität: 01.07.2016 DE 102016212048
(43) Veröffentlichungstag der Anmeldung: 08.05.2019
(73) Patentinhaber: Fraunhofer-Gesellschaft zur Förderung der angewandten Forschung e.V., 80686 München (DE)
(72) Erfinder: FRIEDRICH, Hans-Jürgen, 01833 Stolpen (DE); HIELSCHER, Mario, 19053 Schwerin (DE); HINRICHS, Torsten, 19053 Schwerin (DE); ROTT, Hans-Jürgen, 01328 Dresden (DE)
(74) Vertreter: Kailuweit & Uhlemann Patentanwälte Partnerschaft mbB
(86) Internationale Anmeldenummer: PCT/EP2017/066314
(87) Internationale Veröffentlichungsnummer: WO 2018/002323

(56) Entgegenhaltungen:
- WO-A1-2011/069192
- US-A- 5 254 225
- US-A9- 2015 152 309

## Beschreibung

Die Erfindung betrifft ein Verfahren zur Behandlung von Geothermalfluid- oder Formationswasser- Förderströmen vor deren energetischer Nutzung oder Verbringung in die Umwelt durch kontinuierliche elektrochemische Abtrennung radioaktiver, toxischer und Scales-bildender reduzierbarer Metall- und/oder Metalloidionen aus dem Förderstrom mittels einer Vorrichtung zur galvanischen Abscheidung.

Geofluide, die für eine direkte energetische Nutzung oder die zum Zweck der Rohstoffgewinnung aus tieferen Gesteinsformationen gefördert werden, enthalten oft in höherer Konzentration verschiedenste gelöste, emulgierte oder suspendierte Stoffe. Das stoffliche Spektrum kann sich dabei über alle natürlich vorkommenden chemischen Elemente erstrecken. Es variiert aber naturgemäß erheblich in Abhängigkeit von den geologischen und hydrochemischen Verhältnissen in den erschlossenen Lagerstättenhorizonten und auch in Abhängigkeit vom Förderregime.

Speziell Thermalwässer- oder -fluide aus tieferen geologischen Horizonten und Formationswässer aus der Kohlenwasserstoffförderung enthalten eine Vielzahl chemischer Verbindungen, darunter auch sog. NORM-Stoffe und toxische chemische Elemente und deren Verbindungen. Die NORM-Stoffe (naturally occuring radioactive material) und die toxisch chemischen Elemente liegen zwar zumeist nur in niedrigen Konzentrationen in den geförderten Geofluiden vor, sie können sich jedoch auf Oberflächen exponierter Werkstoffe, in Filtersystemen und Produktionsrückständen oft stärker anreichern. An solchen Scales werden Aktivitätskonzentrationen von teils mehreren hundert Bq/g gemessen. Diese Bildung von sog. Scales ist aus ökologischer und ökonomischer Sicht in hohem Maße unerwünscht.

Strenge gesetzliche Bestimmungen zum Umgang mit und zur Entsorgung von solchen Stoffen spielen dabei eine entscheidende Rolle. Der Schutz der Beschäftigten und auch der Umwelt bei Wartungs- und Instandhaltungsarbeiten, beim Recycling vormals in solchen Fluiden exponierter Anlagenteile und bei der Entsorgung und sicheren Endlagerung kontaminierter Rückstände und Bauteile ist aufwendig und kostenintensiv.

Des Weiteren mindern die Scales stark den Wirkungsgrad der zur energetischen Nutzung der Geofluide installierten Anlagen, wie beispielsweise von Wärmetauschern, deren mit dem besagten Fluid in Kontakt stehenden Oberflächen nach einiger Zeit mit dickeren Schichten von Scales belegt sind. Nicht zu vernachlässigen ist auch die korrosionsfördernde Wirkung, die beispielsweise Metallionen in den Geofluiden auf die Werkstoffoberflächen von beispielsweise Metallrohren ausüben.

Eine latente Besorgnis in der Öffentlichkeit gegenüber einem Umgang mit solchen Stoffen führt weiterhin oft zur Verzögerung der Realisierung von technischen Projekten dieser Art.

Diese Schwierigkeiten können weitgehend vermieden werden, wenn die geothermalen Tiefenwässer oder die Formationswässer vorzugsweise vor ihrer Förderung nach Übertage in geeigneter Weise so behandelt werden, dass die genannten NORM-Stoffe und toxischen chemischen Elemente vorzugsweise bereits Untertage, mindestens jedoch im Bereich des übertägigen Ansatzpunktes der Förderbohrung aus dem Förderstrom eliminiert werden. Andererseits können sowohl das geförderte Geofluid als auch die abgelagerten Scales neben den toxischen Schwermetallen und NORM-Stoffen auch Metallionen seltener Metalle enthalten, deren Gewinnung lohnenswert sein kann. Eine Voraussetzung hierfür ist eine effiziente Trennung von den unerwünschten Bestandteilen.

Bekannt sind technische Ansätze zur Vermeidung der unkontrollierten Ablagerung mineralischer Verbindungen auf Oberflächen, wie Kalk- bzw. Kieselsäure-haltiger Scales oder bestimmte Sulfatsalze. Scalebildungen auf dieser Basis werden in der Praxis häufiger angetroffen. In solchen Scales können auch NORM-Stoffe oder toxische chemische Elemente eingebaut sein, wie z.B. Radiumsulfat in Schwerspat- oder Coelestin-haltigen Scales.

Die Ablagerung carbonatischer Scales lässt sich in bekannter Weise durch Beeinflussung des pH-Wertes und/oder des CO₂-Partialdrucks beeinflussen.

In US 4,513,818 wird vorgeschlagen, unterschiedlich konzentrierte Fluidströme zur Verminderung der Scalebildung zu vermischen.

US 4,454,919 offenbart ein indirektes Verfahren der Säuerung (Erniedrigung des pH-Wertes des geothermalen Fluids oder Formationswassers), bei dem die Säure schrittweise aus einem Präkursor durch Hydrolyse erzeugt wird. Dies hat allerdings den Nachteil, dass die Korrosionsneigung der Werkstoffe unter den ohnehin meist schwierigen Expositionsbedingungen weiter erhöht wird.

In US 4,224,151 wird ein Verfahren zur Verhinderung von Scaleablagerungen in geothermischen Fluiden beschrieben, wobei zur Beseitigung von Schwefelwasserstoff/ Hydrogensulfiden eine Umsetzung zu Sulfaten über die Reaktion mit Sauerstoff vorgeschlagen wird. Zwar finden sich in den adressierten sulfidischen Scales toxische chemische Elemente und auch NORM-Stoffe in teils hoher Anreicherung. Eine Vermeidung auf diese Weise ist jedoch mit erheblichen Nachteilen verbunden. Der Eintrag von Sauerstoff in die in aller Regel halogenidhaltigen Geothermalfluide steigert deren Korrosionswirkung auf metallische Werkstoffe um ein Vielfaches und kann in kurzer Zeit zu schwersten Anlagenschäden führen. Das als Reaktionsprodukt gebildete Sulfat kann seinerseits zu erneuter Scalebildung beitragen. Die hierdurch ggf. mit bewirkte Oxidation gelöst vorliegender leicht oxidierbarer Fe- und Mn-Ionen kann ebenfalls zu erneutem Scaling führen.

In breiterem Umfang wird zur Vermeidung von Scalebildung die Zugabe von Inhibitoren zum Geofluid angewendet. Dabei kommen unterschiedlichste Arten von Komplexbildnern zum Einsatz.

In WO 2015 /088675 A1 wird der Einsatz von Phosphonsäureestern beschrieben.

Auch Acrylsäuren, aliphatische Carbonsäurederivate und der Einsatz einer Reihe von weiteren chemischen Verbindungen wurde zu diesem Zweck vorgeschlagen (Stapleton, M. und Weres, O, "Recent Development in Geothermal Scale Control", Proceedings International Workshop on Mineral Scale Control, Manila, 2011 S. 68 ff., Mejorada, A. et.al. "Calcite Inhibition System: Lihir Experience", Proceedings International Workshop on Mineral Scale Control, Manila, 2011 S. 8, Wilson, D. und Harris, K. "Development of a "Green" Hydrothermally Stable Scale Inhibitor for Geothermal Wells and Pipelines", ebenda. S. 107 ff., Gill, J. S. "New Inhibitors for Silica and Calcium Carbonate Control in Geothermal Systems", ebenda, S. 113 ff, "Prevention and Solutions for the Scale Problem at the Geothermal Power Plant and CDM Study in Indonesia", Study Report, Engineering and Consulting Firms Association, Japan, 2006).

Auf diese Weise lassen sich Ablagerungen aus Calcit und teilweise auch silicatische recht gut beherrschen, nicht jedoch die o.g. sulfidischen oder metallischen Ablagerungen, in denen sich geogene Radionuklide und toxische chemische Elemente bevorzugt anreichern.

Wirksame und technisch einsetzbare Vorrichtungen und Verfahren zur gezielten Entfernung von NORM-Stoffen und von toxischen chemischen Elementen aus dem Förderstrom noch untertage sind bislang nicht bekannt.

Zwar kommt es durch natürlich ablaufende Prozesse, wie Korrosionsreaktionen an exponierten Metalloberflächen, zu einer Anreicherung der vorgenannten, und auch anderer Stoffe auf Oberflächen und damit zu einer Abnahme der Konzentration in der flüssigen Phase. Dies geschieht meist infolge Adsorption an den Werkstoffoberflächen selbst, teils infolge Absorption in Werkstoffe oder an gebildeten Sekundärmineralen sowie durch lokales Verdampfen der flüssigen Phase. Die Prozesse verlaufen jedoch unkontrolliert und führen letztlich zu den beschriebenen Kontaminationsproblemen auf großen Oberflächenbereichen. In US 5,409,614 wird vorgeschlagen, die Kinetik der Keimbildung gezielt zu beeinflussen, um hierdurch auch die Deposition von natürlichen Radionukliden, speziell von Radiumisotopen zu vermeiden. Hierzu dienen u.a. Amino-Alkylphosphonate, Polyphosphonsäuren, Phosphorsäureester und Phosphonocarboxylate. Durch die permanente Zugabe solcher Verbindungen lässt sich die Anreicherung von radiumhaltigen Mineralen auf exponierten Oberflächen in gewissen Grenzen beeinflussen.

US 4,602,820 offenbart ein Verfahren zur Gewinnung werthaltiger Metalle aus einem Thermalwasserstrom durch deren reduktive Abscheidung auf der Oberfläche hinzugefügter unedler Metalle wie Eisen, Zink, Aluminium oder deren Mischungen. Dabei sollen Aufschlämmungen von Metallpartikeln über eine separate Rohrleitung im Inneren des Bohrlochs in die Tiefe geführt und dort mit dem Förderstrom vermengt werden. Unter partieller Auflösung der im stöchiometrischen Überschuss zu gegebenen Menge an metallischem Reduktionsmittel sollen dann werthaltige chemische Elemente wie Gold, Silber, Kupfer, Blei und Zinn abgeschieden werden. Das chemische Element Blei spielt bei der Scalebildung sowohl unter toxikologischen wie auch unter Strahlenschutzaspekten eine Rolle, da es auch das natürlich vorkommende Isotop mit der Massenzahl 210 enthält und die so erzielten Abscheidungen damit radioaktiv und als NORM-haltig angesehen werden können. Die mit den werthaltigen chemischen Elementen beladenen Partikel sollen dann durch Magnetscheidung, Zentrifugation oder Filtration vom Förderstrom abgetrennt werden.

Nachteilig ist an diesem Verfahren, dass Partikel untertägig zum Förderstrom hinzugefügt werden, die dann Übertage abgetrennt werden sollen. Folglich erhöht sich der zu fördernde Massenstrom, was entweder einem artesischen System Energie entzieht oder aber zusätzliche Pumpleistung und damit zusätzlichen Energieaufwand erfordert. Gleiches gilt für die Einbringung eines zusätzlichen Rohres in die Förderleitung, wodurch deren Querschnitt verringert und der hydraulische Widerstand erhöht wird.

Ein mit Metallpartikeln beladenes Fördermedium wirkt zudem abrasiv, wodurch technische Komponenten entlang des Förderweges geschädigt werden können. Dabei können zusätzliche Partikel erzeugt werden. Die in den Förderstrom direkt oder indirekt eingebrachten Partikel müssen vor der Re-Injektion des Fördermediums in den Speicherhorizont vollständig entfernt werden, um eine Kolmation des porösen geologischen Speichers zu vermeiden. Ggf. sind hierfür auch weitere oder umfangreichere als die vorgeschlagenen Trennoperationen erforderlich, was mit zusätzlichem technischen Aufwand einhergeht. Die Abscheidung der werthaltigen Metalle auf den eingebrachten Metallpartikeln im Zuge einer spontanen Korrosionsreaktion verläuft weitgehend ungesteuert. In stark korrosiven Medien kann die Auflösung der Partikel allein durch Reaktion mit den korrosiv wirkenden Hauptinhaltsstoffen des Fördermediums, wie Wasser, Protonen, Kohlendioxid (Kohlensäure), Halogenidionen und/oder Schwefelwasserstoff bewirkt werden. Dabei gehen die als Reduktionsmittel dienenden Metalle in Form ihrer Ionen in Lösung. Die gebildeten Ionen unterliegen nachfolgend Komplexbildungs-, Hydrolyse- und Fällungsreaktionen, in deren Folge neuerliche Scales gebildet werden können. Bestehen solche Scales z.B. aus Eisensulfiden, erhöhen sie durch ihr positiveres Redoxpotential die Korrosionsneigung bei Kontakt zu ungeschützten Oberflächen aus unlegierten Stählen. Auch eine Passivierung der Partikel ist auf diese Wiese möglich.

Eine gesteuerte Abscheidung zur Metallgewinnung aus Thermalsole wird in der US 5,254,225 vorgeschlagen. Hierzu sollen zwei voneinander getrennte Elektroden in das Medium eingebracht und mit Potentialen bis zu 3 V beaufschlagt werden, um einen Stromfluss und eine Abscheidung der Metalle Eisen, Zink, Blei und Mangan zu erreichen. Näher spezifiziert ist diese Anwendung für hydrochemische Verhältnisse, wie sie typischerweise unter den Gegebenheiten in Salton Sea, Californien (USA) vorherrschen. Dabei sollen die genannten Metalle als chemisches Element, als Oxide, Carbonate oder Oxychloride abgeschieden werden, wobei ein Abscheidezyklus maximal 48 h dauert. Danach werden die zuvor abgeschiedenen Metalle wieder abgelöst, wofür ein anderes chemisches System benötigt wird. Das technische System zur Abscheidung wird dabei vor den Re-Injektionspumpen angeordnet. Das hydrochemische System ist dabei durch nahezu Umgebungsdruck und Temperaturen unter dem Siedepunkt gekennzeichnet. Als besonderer Vorteil wird bezeichnet, dass die genannten Metalle weitgehend frei von sonstigen Scales gewonnen werden können. Als Elektrodenmaterialien werden Graphit, Stahl und Edelstähle vorgeschlagen, die als Platte oder Bleche eingesetzt werden. Als Anodenmaterial dient dabei Graphit, gelegentlich besteht diese auch aus Kohlenstoffstahl, die Kathode wurde aus den vorgenannten Stählen gefertigt. Es können auch multiple Anordnungen der genannten Elektroden zum Einsatz kommen. Dreidimensionale Elektroden, z.B. Drahtspulen, erwiesen sich als wenig geeignet. Mit dem beschriebenen Verfahren gelang eine Anreicherung der vorgenannten chemischen Elemente im erzeugten Niederschlag auf der Elektrodenoberfläche, wobei die Anreicherung für Eisen bis 20%, für Mangan bis 6%, für Blei bis 13% und für Zn bis 5% erreichte. Edlere Metalle wie Silber, Palladium, Platin oder Gold konnten auf diese Weise nicht angereichert werden.

Mit dem beschriebenen Verfahren konnten toxische Metalle und NORM-bildende chemische Elemente nur bis maximal 13% angereichert werden, wie dies für Blei beschrieben ist. Den übergroßen Anteil der auf diese Weise festgelegten Stoffe bilden an sich wenig problematische Verbindungen der chemischen Elemente Eisen, Mangan und Zink. Dies ist nachteilig für eine technische Anwendung zur gezielten Entfernung toxischer oder natürlich vorkommender radioaktiver Isotope aus dem Thermalfluidstrom. Ebenso konnten keine edleren oder seltenen Metalle gewonnen werden.

Da die Abscheidung erst übertage unmittelbar vor der Re-Injektion stattfindet, kann nach wie vor eine Ablagerung der unerwünschten Scales in sämtlichen übertägigen Anlagenteilen erfolgen. Eine Unterbringung des beschriebenen Reaktionssystems (der Vorrichtung in Form eines Plattenelektrolyseurs) nach Untertage wäre mit sehr großem Aufwand verbunden.

Die vorgeschlagene Anwendung von Potentialen bis 3 V kann im Falle der Verwendung von Anoden aus Graphit gemäß der elektrochemischen Spannungsreihe zur Oxidation von gelöstem Wasserstoff unter Bildung von Protonen, zur Bildung von dreiwertigen Eisenionen aus zweiwertigen führen, die durch nachfolgende Hydrolyse schwerlösliches Eisen(III)hydroxid und Protonen bilden. Außerdem kann es zur Bildung von Sauerstoff und von Protonen, zur Bildung von Halogenen, insbesondere von Chlor und zur Bildung von Sulfat (Schwefelsäure) aus Schwefelwasserstoff kommen.

Die gebildeten Protonen, Eisen(III)ionen, Sauerstoff und Halogene oder Säuren stellen Oxidationsmittel dar, die bekanntermaßen stark korrosionsfördernd wirken können. Dies ist in den ohnehin durch Korrosion gefährdeten technischen Systemen zur Nutzung von Thermalfluiden in sehr hohem Maße unerwünscht und muss daher vermieden werden. Die Abscheidung von Eisen(III)hydroxid in Elektrodennähe kann deren Oberfläche belegen und den Stofftransport für Metallionen blockieren. Berühren sich die auf den Kathoden und Anoden abgeschiedenen elektrisch leitenden Stoffe, kann es zu einem Kurzschluss kommen, sodass der Prozess nachfolgend zum Erliegen kommt.

Wird an Stelle der Graphitanode in beschriebener Weise eine aus Kohlenstoffstahl verwendet, unterliegt diese der Oxidation und Auflösung. Die Abscheidung der genannten Metalle Eisen, Mangan, Zink, Zink und Blei erfordert dann die Auflösung einer stöchiometrisch äquivalenten Menge an Kohlenstoffstahl, sodass einerseits keine netto-Abscheidung von Eisen erfolgen kann. Andererseits werden dabei eine erhebliche Menge Eisenionen und weitere Legierungsbestandteile technischer Kohlenstoffstähle, wie Mangan, Kohlenstoff und Silicium teils partikulär in das hydrochemische System eingetragen, was auf diese Weise oder durch Hydrolyse/Fällung zuvor aufgelöster Metalle wiederum zur Scalebildung führt. Dies ist jedoch im Hinblick auf die zu gewährleistende Permeabilität des Re-Injektionshorizontes unerwünscht.

Die Abtrennung der Scales-bildenden Stoffe aus dem direkt aus den Gesteinsformationen kommenden Fluidstrom wird durch den hohen Flüssigkeits-Druck von bis zu 100 bar und die hohen Temperaturen von bis zu 200 °C des Fluids zusätzlich erschwert.

Aus der US 2014/0239221 A1 ist ein Verfahren zur Behandlung von geothermaler Sole bekannt, in dem Lithium durch Sorption aus der Sole abgetrennt wird. Die hierbei anfallende Lithiumchlorid enthaltende Lösung kann in einer Elektrolysezelle weiterbehandelt werden.

Aufgabe der Erfindung ist es, ein effizientes Verfahren zur Aufbereitung von Geothermalfluid- oder Formationswasser- Förderströmen bereitzustellen, das die Abtrennung radioaktiver, toxischer und Scales-bildender reduzierbarer Metall- und/oder Halbmetall- und/oder Nichtmetall-Ionen aus dem Förderstrom sowohl Ober- als auch Untertage ermöglicht.

Die Aufgabe wird gelöst durch ein Verfahren zur Behandlung von Geothermalfluid- oder Formationswasser- Förderströmen vor deren energetischer Nutzung oder Verbringung in die Umwelt durch kontinuierliche, elektrochemische Abtrennung radioaktiver, toxischer und Scales-bildender reduzierbarer Metall- und/oder Halbmetall- und/oder Nichtmetallionen aus dem Förderstrom mittels einer Vorrichtung zur galvanischen Abscheidung mit i) einem oder ii) mehreren Reaktionsräumen, umfassend jeweils eine elektrochemische Abscheidevorrichtung, aus Anodenraum mit Anode und Anolyt und Kathodenraum mit Kathode, wobei die Polarität von Anode und Kathode jeweils umkehrbar ist,
wobei bei mehreren Reaktionsräumen jeder Reaktionsraum jeweils mit den vorhandenen weiteren baugleichen Reaktionsräumen strömungsparallel geschalten ist
mit den Schritten
a) Durchleiten des Förderstroms mit einem Druck von 1 bis 100 bar und/oder einer Temperatur von 10 bis 200 °C durch den Kathodenraum der elektrochemischen Abscheidevorrichtung
   i) des Reaktionsraums mit noch unbeladener Kathode oder
   ii) mindestens eines Reaktionsraums mit noch unbeladener Kathode, wobei jedoch mindestens ein Reaktionsraum nicht durchströmt wird
b) Anlegen eines regelbaren elektrischen Stroms mit einer Stromdichte von 0,01 - 10 mA/cm² an die elektrochemischen Abscheidevorrichtung im durchströmten Reaktionsraum, wobei die in dem Förderstrom enthaltenen Metalle und/oder Halbmetalle und/oder Nichtmetalle reduziert und in metallischer oder mineralischer Form auf der Kathode abgeschieden werden und diese beladen,
c)
   i) Unterbrechung des Förderstroms, wenn die Kathode beladen ist oder
   ii) Umleitung des Förderstroms, wenn die Kathode beladen ist, in mindestens einen Reaktionsraum mit noch unbeladener Kathode und Durchleiten des Förderstroms durch den Kathodenraum des mindestens einen Reaktionsraums mit noch unbeladener Kathode und darin Wiederholung von Schritt b)
d) Regenerierung des mindestens einen in den Schritten a) und b) durchströmten Segments durch Entfernung der auf dessen Kathodenmaterial abgeschiedenen Metalle und/oder Metalloide durch
   d.1) Ausbringung des beladenen Kathodenmaterials inklusive der abgeschiedenen Metalle und/oder Metalloide aus dem Kathodenraum und Hinzufügen neuen Kathodenmaterials
      oder
   d.2) Regenerierung des Kathodenmaterials durch Schalten des beladenen Kathodenmaterials als Anode und dessen Behandlung mit einer Mineralsäurelösung, wobei die dabei gewonnene Lösung, enthaltend die gelösten Metalle und/oder Halbmetalle und/oder Nichtmetalle über die Injektionsbohrung zurück in das Reservoir verbracht wird oder wobei die dabei gewonnene Lösung entnommen wird und die Metalle und/oder Halbmetalle und/oder Nichtmetalle durch galvanische Abscheidung, flüssig-flüssig-Extraktion oder andere dem Fachmann an sich bekannte Methoden gewonnen werden,
wobei Anoden- und Kathodenraum jeweils durch eine Anionen- oder Kationenaustauschermembran oder einen porösen Separator voneinander getrennt sind,
und wobei der Anolyt eine wässrige Lösung anorganischer und/oder organischer oxidierbarer Verbindungen mit einem Redoxpotential unter dem des Redoxsystems Cl⁻/Cl₂ ist, sodass die Bildung von Chlorgas unterdrückt wird,
wobei die oxidierbaren Verbindungen während der Abscheidung anodisch oxidiert werden, wobei der Anolyt in einem separaten Kreislauf geführt wird und regeneriert wird, wenn alle oxidierbaren Verbindungen oxidiert sind,
wobei die Vorrichtung obertägig oder untertägig in den Förderstrom geschalten ist. Erfindungsgemäß erfolgt die Abtrennung radioaktiver, toxischer und Scales-bildender reduzierbarer Metall- und/oder Halbmetall- und/oder Nichtmetallionen aus einem aus Gesteinsformationen kommenden Förderstrom.

Halbmetalle und Nichtmetalle können auch unter dem Begriff Metalloide zusammengefasst werden.

Erfindungsgemäß werden Förderströme aufbereitet, die direkt aus Fluidschichten aus Gesteinsformationen aus dem Erdinneren gefördert werden.

Förderströme, die direkt aus den Gesteinsformationen gefördert werden, weisen hohe Drücke im Bereich von 1 bis 100 bar und/oder hohe Temperaturen im Bereich von 10 bis 200°C auf. Vorteilhaft wird der Förderstrom ohne Druckminderung und ohne Temperatursenkung zu Schritt a) des erfindungsgemäßen Verfahrens geführt.

Der Förderstrom wird in einem hydraulischen System zutage gefördert.

Die elektrochemische Abtrennung radioaktiver, toxischer und Scales-bildender reduzierbarer Metall- und/oder Halbmetall- und/oder Nichtmetallionen aus dem Förderstrom erfolgt kontinuierlich.

Im Sinne der Erfindung bedeutet kontinuierlich, dass die Abtrennung der Metall- und/oder Halbmetall- und/oder Nichtmetallionen ohne Unterbrechung des Förderstromes erfolgt, oder mit so kurzer Unterbrechung, dass im Verhältnis zur Dauer des Abtrennens ohne Unterbrechung der Unterbrechungszeitraum vernachlässigbar klein ist.

Vorteilhaft kann somit das hydraulische System zur Förderung des Fluidstromes aufrechterhalten werden.

In einer Ausführungsform erfolgt die Abtrennung der Metall- und/oder Halbmetall- und/oder Nichtmetallionen kontinuierlich mit einem zeitlichen Verhältnis von der Aufarbeitung des Förderstroms zur Unterbrechung des Förderstroms von 1 Woche Behandlung/ 1 Stunde Regeneration bis 1 Monat Betrieb/ 1 Stunde Regeneration.

Erfindungsgemäß erfolgt die Abtrennung elektrochemisch mittels einer Vorrichtung zur galvanischen Abscheidung mit i) einem oder ii) mehreren Reaktionsräumen. Erfindungsgemäß umfasst jeder Reaktionsraum eine druck- und/oder temperaturbeständige elektrochemische Abscheidevorrichtung. Als elektrochemische Abscheidevorrichtung bezeichnet man erfindungsgemäß eine Elektrolysezelle mit Kathodenraum mit Kathode und einen Anodenraum mit Anode und Anolyten. Dem Fachmann ist der Aufbau von Elektrolysezellen zur elektrochemischen Abscheidung bekannt.

Im Sinne der Erfindung bedeutet druckbeständig, dass die elektrochemische Abscheidevorrichtung so ausgelegt ist, dass sie von der aufzuarbeitenden Flüssigkeit mit einem Druck von 1 bis 100 bar, bevorzugt 5 bis 50 bar, besonders bevorzugt 5 bis 25 bar durchströmt und elektrolytisch behandelt wird.

In einer Ausführungsform ist die elektrochemische Abscheidevorrichtung so ausgelegt, dass der Kathodenraum von der aufzuarbeitenden Flüssigkeit mit einem Druck von 1 bis 100 bar, bevorzugt 5 bis 50 bar, besonders bevorzugt 5 bis 25 bar durchströmt und elektrolytisch behandelt wird.

Im Sinne der Erfindung bedeutet temperaturbeständig, dass die elektrochemische Abscheidevorrichtung so ausgelegt ist, dass sie von der aufzuarbeitenden Flüssigkeit mit einer Temperatur von 0 bis 200 °C, bevorzugt 10 bis 170°C durchströmt und elektrolytisch behandelt wird.

In einer Ausführungsform ist die elektrochemische Abscheidevorrichtung so ausgelegt, dass der Kathodenraum von der aufzuarbeitenden Flüssigkeit mit einer Temperatur von 0 bis 200 °C, bevorzugt 0 bis 170°C durchströmt und elektrolytisch behandelt wird.

In einer Ausführungsform ist das Material für die Kathode ausgewählt aus Metallen der Gruppe IVb, Vb, Vlb, Vlllb, Ib, IIb, III, IV, des PSE und/oder deren Legierungen untereinander soweit sie unter den Einsatzbedingungen in festem Aggregatzustand vorliegen und/oder Kohlenstoff und/oder Silicide, Nitride und Carbide sowie Boride der vorgenannten chemischen Elemente, und/oder unlegierten, legierten und hochlegierten Stählen, Nickel- und Cobaltbasislegierungen, und/oder Kohlenstoffallotropen.

In einer Ausführungsform wird eine Kathode in Form eines Blechs in ebener Geometrie, hohlen Zylinders bzw. Röhre, Granulats, Gewebes, Drahtgeflechts und/oder dreidimensionalen Netzwerks von Metallfilamenten verwendet.

Bevorzugt beträgt die Dicke des Bleches 0,1 - 2 mm für den Fall, dass die Kathode als ebene oder gewölbte Platte, in Zylinderform bzw. röhrenförmig im Innenraum des Reaktionsraums ausgebildet ist.

In einer Ausführungsform ist die Kathode zweiteilig ausgebildet. Der äußere röhrenförmige Teil bildet gleichzeitig die äußere Begrenzung des Reaktionsraums, während der innere aus einer Kugelschüttung oder einem dreidimensionalen Netzwerk aus Metallfilamenten besteht. Bevorzugt ist der äußere Teil der Kathode dann in Form eines Hohlzylinders ausgebildet. Bevorzugt beträgt die Dicke des Bleches des Hohlzylinders dann 2 bis 5 mm. Die so ausgebildete äußere Kathode kann zudem Aussparungen zur Aufnahme weiterer Vorrichtungsteile aufweisen, insbesondere von Strom- und Elektrolytzuführungen. In diese Aussparungen von zweckmäßigerweise kreisförmiger Geometrie können ferner Dichtungs- und Isolationsbauteile aus elektrisch isolierenden und chemisch sowie thermisch hinreichend beständigen nichtmetallischen Werkstoffen eingebracht sein und sich durch den inneren Teil der Kathode hindurch erstrecken. Bevorzugt werden hierfür Polytetrafluoroethylen, Polyvinylidenfluorid, Polyetheretherketon, Silikonkautschuk, Viton®, Polyimid verwendet. Die Befestigung der Isolations- und Dichtungsbauteile erfolgt dabei auf zweckmäßige Art und Weise durch Verschraubung, Anpressung und andere dem Fachmann bekannte Befestigungsarten.

In einer Ausführungsform handelt es sich bei dem Kathodenmaterial im Inneren um ein Granulat. Bevorzugt liegt das Granulat in sphärischer Geometrie vor, ausgewählt aus Zylinder, Rotationsellipsoid und/oder Kugel, wobei die Granulate auch hohl sein können.

Bevorzugt beträgt der Durchmesser des Granulats 0.5 bis 10 mm.

In einer weiteren Ausführungsform ist das innere Kathodenmaterial ein dreidimensionales Netzwerk von Metallfilamenten aus Metallfaser- und/oder -folienabschnitten von 0.1 bis 10 mm Breite und 0.001 bis 0.1 mm Dicke.

In einer Ausführungsform besteht die Anode aus Metallen der Gruppe Vlllb des PSE und/oder deren Oxiden und/oder ihren Legierungen untereinander oder aus Allotropen des Kohlenstoffs, aus Bleidioxid, aus Silciumcarbid, aus Titannitrid, Titanborid, aus Chrom, Molybdän, Wolfram, Niob und/oder Tantal und/oder aus Nickel- oder Cobaltbasislegierungen.

Bevorzugt liegen die Metalle der Gruppe Vlllb oder deren Legierungen überwiegend als Metalloxide oder deren Mischungen vor. Zur Erzielung bestimmter vorteilhafter elektrochemischer Eigenschaften können diesen Oxiden auch solche von Wolfram, Molybdän, Tantal, Titan, Zirkonium, Hafnium, Cer beigemischt sein.

In einer Ausführungsform ist die Anode eine Verbundanode, bestehend aus einem chemisch inerten, leitfähigen Trägermaterial, beschichtet mit einer Schicht Anodenmaterial der vorgenannten Verbindungen mit einer Schichtdicke von 0,1 bis 100 µm, bevorzugt 1 bis 20 µm.

Dazu werden die vorgenannten Anodenmaterialien auf ein Trägersubstrat aus einem chemisch hinreichend inerten und gut elektrisch leitfähigen Metall durch bekannte Verfahren, wie galvanische Abscheidung, Flammspritzen, durch hydrothermale Prozesse oder durch sogenannte CVD-Verfahren aufgebracht.

In einer Ausführungsform ist die Erscheinungsform der Anode ausgewählt aus Blech, Stab, Rohr, Draht, Drahtgeflecht oder -spirale.

Erfindungsgemäß erfolgt die Abtrennung radioaktiver, toxischer und Scales-bildender reduzierbarer Metall- und/oder Halbmetall- und/oder Nichtmetallionen mittels einer Vorrichtung zur galvanischen Abscheidung i) mit einem oder ii) mit mehreren Reaktionsräumen.

In Variante i) erfolgt die Abtrennung in einem Reaktionsraum, enthaltend eine elektrochemische Abscheidevorrichtung mit Anodenraum, enthaltend Anode und Anolyt und mit Kathodenraum, enthaltend Kathode und Katholyt. Zwischen beiden Reaktionsräumen ist ein semipermeabler Separator angeordnet, der Anolyt und Katholyt voneinander trennt.

Dazu wird der Förderstrom durch einen Zulauf des Reaktionsraums, der so angeordnet ist, dass der Förderstrom direkt in den Kathodenraum der elektrochemischen Abscheidevorrichtung geleitet wird, in den Kathodenraum geleitet.

Dann erfolgt in Verfahrensschritt a) das Durchleiten des Förderstroms durch den Kathodenraum der elektrochemischen Abscheidevorrichtung des einen Reaktionsraums mit noch unbeladener Kathode und in Schritt b) die elektrochemische Abscheidung der in dem Förderstrom enthaltenen Metalle und/oder Halbmetalle und/oder Nichtmetalle auf der Kathode.

Zur Regenerierung des Reaktionsraums nach Beladung der Kathode wird der Förderstrom in Schritt c, i) unterbrochen. In einer Ausführungsform erfolgt die Unterbrechung des Förderstroms durch Schließen des Zulaufs des Reaktionsraums. Nach der Regenerierung in Schritt d nach Variante d1 oder d2, wird der Zulauf geöffnet und der Förderstrom wieder durch den Kathodenraum der elektrochemischen Abscheidevorrichtung geleitet, um gemäß den Verfahrensschritten a) und b) weiter behandelt zu werden.

Der Zeitraum vom Eintritt des Förderstroms in den Kathodenraum mit noch unbeladener Kathode bis zur Regenerierung der beladenen Kathode beträgt einige Tage bis mehrere Wochen, bevorzugt 1 bis 5 Wochen.

Die Unterbrechung des Förderstroms und Regenerierung der Kathode bedarf hingegen nur weniger Stunden, bevorzugt 0,5 bis 5 h, besonders bevorzugt 1 bis 2 h.

Dieser Zeitraum ist im Verhältnis zur Dauer des kontinuierlichen Durchströmens des einen Reaktionsraums vernachlässigbar klein. Vorteilhaft wird damit das hydraulische System aufrechterhalten und man kann noch immer von einer kontinuierlichen Behandlung des Förderstroms sprechen.

Für eine kontinuierliche Behandlung des Förderstroms ohne Unterbrechung gemäß Variante ii) erfolgt die Abtrennung der Metall- und/oder Halbmetall- und/oder Nichtmetallionen aus dem Förderstrom mittels einer Vorrichtung zur galvanischen Abscheidung mit mehreren, also mindestens zwei Reaktionsräumen, umfassend jeweils eine elektrochemische Abscheidevorrichtung aus Anodenraum mit Anode und Anolyt und Kathodenraum mit Kathode, wobei bei mehreren Reaktionsräumen ein Reaktionsraum jeweils mit vorhandenen weiteren baugleichen Reaktionsräumen strömungsparallel geschalten sind.

In einer Ausführungsform befinden sich die Reaktionsräume in einem oder in mehreren Reaktoren.

Im Sinne der Erfindung ist ein Reaktor ein Gehäuse, in dem mindestens zwei Reaktionsräume, enthaltend jeweils eine elektrochemische Abscheidevorrichtung aus Anodenraum mit Anode und Anolyt und Kathodenraum mit Kathode, angeordnet sind.

In einer Ausführungsform sind mindestens zwei Reaktionsräume innerhalb eines Reaktors angeordnet. Dann verfügt der Reaktor über einen Haupt-Zu- und -Ablauf und jeder einzelne Reaktionsraum zusätzlich über einen eigenen Zu- und Ablauf. Zwischen beiden Reaktionsräumen ist ein semipermeabler Separator angeordnet, der Anolyt und Katholyt voneinander trennt. Der Separator ist als keramisches Diaphragma oder als lonenaustauschermembran ausgebildet. In einer Ausführungsform werden über die lonenaustauschermembran bevorzugt einwertige Kationen (Kationenaustauschermembran) oder einwertige Anionen (Anionenaustauschermembran) vom jeweils einen in den jeweils anderen Elektrodenraum transportiert.
Der Förderstrom wird dann über den Haupt-Zulauf zunächst in den Reaktor und darin über einen Strömungsverteiler in den Kathodenraum des jeweiligen zur Abtrennung verwendeten Reaktionsraums geleitet.

In einer Ausführungsform sind die mehreren Reaktionsräume nicht in Reaktoren, sondern einzeln, räumlich voneinander separiert, angeordnet. Jeder Reaktionsraum verfügt über Zu-und Ablauf. Der Förderstrom wird dann über einen Strömungsverteiler in der Hauptleitung in den jeweiligen zur Abtrennung verwendeten Reaktionsraum geleitet.

Erfindungsgemäß ist ein Reaktionsraum jeweils mit vorhandenen weiteren baugleichen Reaktionsräumen strömungsparallel geschaltet.

Jeder Reaktionsraum umfasst eine elektrochemische Abscheidevorrichtung mit Kathodenraum mit Kathode.

In einer Ausführungsform ist die Kathode eine Schüttung aus Granulat. Dann ist in dieser Schüttung mindestens eine Anode angeordnet, die sich symmetrisch innerhalb des durch den Separator abgegrenzten Anodenraums befindet. Der Anodenraum kann dabei auch ringförmig ausgebildet sein, sodass er auf beiden Seiten zur Schüttung aus Granulat durch Separatoren begrenzt wird.

In einer Ausführungsform wird die Kathodenschüttung über die Bodenplatte des Reaktionsraums kontaktiert.

In einer Ausführungsform umfasst ein Reaktionsraum eine elektrochemische Abscheidevorrichtung mit einem Kathodenraum und einem angrenzenden separaten Anodenraum.

In einer Ausführungsform sind mehrere, bevorzugt mindestens 3 Reaktionsräume kreisförmig in einem Reaktor angeordnet.

Dann ist der Anodenraum zentral angeordnet und mehrere, unabhängig voneinander durchströmbare Kathodenräume grenzen an ihn. In dieser Ausführungsform "teilen" sich also mehrere elektrochemische Abscheidevorrichtungen einen gemeinsamen Anodenraum.

Die Flüssigkeit des Förderstroms wird im weiteren Verlauf auch als Katholyt bezeichnet. Im Anodenraum ist erfindungsgemäß ein Anolyt vorgelegt.

Der Katholyt enthält erfindungsgemäß radioaktive, toxische und Scales-bildende reduzierbare Metall- und/oder Halbmetall- und/oder Nichtmetallionen.

In einer Ausführungsform sind die reduzierbaren Metall- und/oder Metalloid-Ionen ausgewählt aus positiv geladenen Ionen der chemischen Elemente Ga, In, TI, Ge, Sn, Pb, As, Sb, Bi, Se, Te, Po, den Sauerstoff enthaltenden Ionen der chemischen Elemente der Gruppe VII des PSE, den Ionen der chemischen Elemente der Gruppen VIb, VIIb, VIIIb, Ib und IIb sowie den Ionen des Urans.

In einer Ausführungsform beträgt die individuelle Konzentration der positiv geladenen Ionen der chemischen Elemente Ga, In, Tl, Ge, Sn, Pb, As, Sb, Bi, Se, Te, Po, der Sauerstoff enthaltenden Ionen der chemischen Elemente der Gruppe VII des PSE, und der Ionen der chemischen Elemente der Gruppen VIb, VIIb, VIIIb, Ib und IIb im Förderstrom jeweils 0,0001 mg/l bis 100 mg/l.

In einer Ausführungsform sind Eisen-, Barium- und/oder Strontium- Ionen und/oder Ionen der leichten Alkalimetalle in höheren Konzentrationen von 0,1 bis 100 g/l im Förderstrom vorhanden.

Diese Ionen werden im Laufe des Verfahrens elektrochemisch reduziert und scheiden sich auf der Kathode als Metalle oder Halbmetalle und/oder Nichtmetalle ab. Die Kathode wird beladen. Je nach Lage des eingestellten Elektrodenpotentials laufen an der Oberfläche der Kathode die reduzierenden Vorgänge ab, die zur Abscheidung mindestens eines der reduzierbaren vorher gelösten Ionen in metallischer oder mineralischer Form auf der Kathode führen. Auch die Reduktion von mindestens einem der vorgenannten sauerstoffhaltigen Ionen zu weiterhin löslichen Ionen erfolgt je nach den gewählten Verfahrensbedingungen.

Im Falle von Sulfat kann die Reduktion über die Zwischenstufe von löslichem Hydrogensulfid auch zu schwerlöslichen Sulfidmineralen führen, die ihrerseits durch Reaktion von Hydrogensulfidionen mit gelösten Metallkationen entstehen. Als lösliche Ionen sollen hierbei auch kolloidal gelöste Ionen verstanden werden. Im Falle des Urans, speziell des Uranylkations UO₂²⁺ führt die Reduktion zum schwerlöslichen Urandioxid. Durch die Reduktion erfolgt die Abscheidung als Metall oder metallische Phase, wobei unter metallischer Phase in diesem Zusammenhang auch gemischte metallische Feststoffe verstanden werden sollen, die aus verschiedenartigen metallischen chemischen Elementen zusammengesetzt sind. Die Abscheidung erfolgt ebenso als Mineral oder mineralische Phase, wobei unter mineralischer Phase in diesem Sinne auch Stoffe zu verstehen sind, die aus mehreren einzeln bestimmbaren Mineralen zusammengesetzt sind.

Der Anolyt ist erfindungsgemäß eine wässrige Lösung, enthaltend mindestens eine anorganische und/oder mindestens eine organische oxidierbare Verbindung. Diese Verbindung wird parallel zu den kathodischen Reaktionen anodisch oxidiert.

Erfindungsgemäß weisen die oxiderbaren Verbindungen ein Redoxpotential unter dem des Redoxsystems Cl⁻/Cl₂ auf.

Im Förderstrom sind natürlich vorkommend nicht unerhebliche Mengen an Natriumchlorid gelöst. Während der Elektrolyse migrieren die Chloridionen in aus dem Katholyten in den Anodenraum und würden dort zur Chlorgas oxidiert werden.

Vorteilhaft wird die Bildung von Chlorgas im erfindungsgemäßen Verfahren unterbunden, indem im Anolyten oxidierbare Verbindungen vorgelegt werden, deren Redoxpotential unter dem des Redoxsystems Cl⁻/Cl₂ von 1,34 V liegt.

Die oxidierbaren Verbindungen mit niedrigerem Redoxpotential werden vor den Chloridionen oxidiert, sodass die Bildung von Chlorgas unterdrückt wird.

In einer Ausführungsform ist die mindestens eine organische oxidierbare Verbindung ausgewählt aus mehrwertigen Alkoholen und/oder Estern. Bevorzugt sind die mehrwertigen Alkohole ausgewählt aus Ethylenglykol, Diethylenglykolmono- und -dibutylether, Resorcin und/oder Pyrogallol. Bevorzugt beträgt die Konzentration der mindestens einen organischen oxidierbaren Verbindung 1 bis 99 Vol-% des Gesamtvolumens des Anolyten, bevorzugt 50 - 99%. Vorteilhaft wird bei der anodischen Oxidation dieser Verbindungen CO2 gebildet, das als Gas den Anodenraum verlassen kann

In einer Ausführungsform ist der Anolyt eine wässrige Lösung mindestens einer organischen oxidierbaren Verbindung ausgewählt aus mehrwertigen Alkoholen und/oder Estern, im Gemisch mit mindestens einem Leitelektrolyten. Bevorzugt ist der Leitelektrolyt ausgewählt aus Chloriden, Carbonaten, Hydrogencarbonaten und/oder Sulfaten der leichten Alkalimetalle sowie des Ammoniums. Bevorzugt beträgt die Konzentration des mindestens einen Leitelektrolyten 0.1 bis 4 mol/l der Gesamtlösung des Anolyten.

In einer Ausführungsform ist die mindestens eine anorganische oxidierbare Verbindung ausgewählt aus Nitriten, Sulfiten, Hydrazinverbindungen und/oder Fe²⁺-Verbindungen in einer Konzentration von 0,1 - 10 Mol/l, bevorzugt von 1 - 5 Mol/l. Ein weiterer vorteilhafter Aspekt ist der nahezu konstante pH-Wert im Anolyten. Bei der anodischen Reaktion werden bei der Abscheidung der Metalle/ Halbmetalle/ Nichtmetalle im Kathodenraum zwar Protonen freigesetzt, woraus sich im Falle einer ungepufferten Lösung von pH = 7 zu Beginn der Abscheidung eine Verminderung des pH-Wertes in den sauren Bereich ergeben würde. Die in der anodischen Reaktion gebildeten Protonen werden über den mikroporösen Separator, bei Verwendung einer Kationenaustauschermembran auch selektiv, in den Kathodenraum transferiert. Das System im Kathodenraum ist infolge der hohen Gehalte vor allem von Calcium- und/oder Natrium- und/oder Hydrogencarbonationen im Förderstrom jedoch gut gepuffert, sodass kaum pH-Wertveränderungen zu erwarten sind.

Damit kann vorteilhaft die Ausfällung von beispielsweise Eisenhydroxid, das sich bei höheren pH-Werten bildet, verhindert werden.

Erfindungsgemäß wird der Anolyt in einem separaten Kreislauf geführt und regeneriert, wenn alle oxidierbaren Verbindungen oxidiert sind. Dazu wird regelmäßig eine Analyse des Anolyten durchgeführt. Dem Fachmann sind Verfahren und Wege zur Bestimmung der Konzentration der oxidierbaren Verbindungen im Anolyten bekannt.

In einer Ausführungsform wird der Anolyt in einem separaten Kreislauf geführt. Bevorzugt wird verbrauchter, das heißt oxidierter, Anolyt dem Kreislauf entnommen und durch frischen Anolyten ersetzt.

Vorteilhaft wird durch die Trennung von Anoden- und Kathodenraum eine Durchmischung von Anolyt und Katholyt verhindert. Damit kann das elektrochemische System von Störungen frei betrieben werden.

Erfindungsgemäß sind Kathoden- und Anodenraum jeweils durch eine Anionen- oder Kationenaustauschermembran oder einen porösen Separator voneinander getrennt. Aufgabe von Membran oder Separator ist es, die Vermischung von Anolyt und Katholyt zu verhindern. Gleichzeitig erlauben die Membranen die bevorzugte Migration bestimmter An- bzw. Kationen. lonenaustauschermembranen sind bevorzugt auf der Basis von Polytetrafluorethen, Polyvinylidenfluorid oder Polyester gefertigt.

In einer Ausführungsform besteht der poröse Separator aus porösem Kunststoff und/oder porösem keramischen Material mit einer mittleren Porenweite von 0.01 bis 250 µm, bevorzugt 0.1 bis 150 µm, besonders bevorzugt 1 bis 100 µm. Bevorzugt weist der poröse Separator eine Dicke von 0.5 bis 10 mm, besonders bevorzugt 1 bis 8 mm, besonders bevorzugt 1 bis 5 mm auf.

Für Niedertemperaturanwendungen, mit einer Temperatur des Förderstroms bis maximal 70°C wird bevorzugt gesintertes Polyethylen oder gesintertes Polyvinylchlorid als poröser Separator verwendet.

Für Temperaturen des Förderstroms bis zu 130 °C besteht der poröse Separator bevorzugt aus gesintertem Polytetrafluoroethen oder Polyvinylidenfluorid.

Für Temperaturen des Förderstroms über 130°C besteht der poröse Separator bevorzugt aus Aluminiumoxid- oder Titandioxid-, Zirkoniumdioxid- oder Siliciumcarbidkeramik. Weiterhin bevorzugt werden auch andere Vertreter aus der Klasse poröser keramischer Werkstoffe als poröser Separator verwendet, die im geothermal- oder Lagerstättenfluid chemisch stabil sind über eine ausreichende mechanische Festigkeit verfügen und nicht elektrisch leitfähig sind.

In einer Ausführungsform strömt das aus dem Erdreich kommende geothermale Fluid oder Formationswassers des Förderstroms zunächst in ein ringförmiges an einem Ende verschlossenes Verteilerrohr von 10 - 150 mm, vorzugsweise 40 - 100 mm Durchmesser, welches in gleichmäßigem Abstand seitliche und nach oben, also in Richtung des Förderstroms, ausgerichtete Bohrungen von 2 - 20 mm Durchmesser, vorzugsweise von 4 - 10 mm Durchmesser aufweist. Der Abstand der Bohrungen voneinander beträgt jeweils 1,5 - 5 Bohrungsdurchmesser, vorzugsweise jedoch 1,5 - 2 Bohrungsdurchmesser.

In einer Ausführungsform weist der Förderstrom einen Volumenstrom von 1 bis 200 m³/h auf, bevorzugt 10 bis 100 m³/h.

Erfindungsgemäß wird der Förderstrom in Schritt a) durch den Kathodenraum einer elektrochemischen Abscheidevorrichtung mit noch unbeladener Kathode geleitet.

Durch gezieltes Öffnen des Zu- und Ablaufs des mindestens einen Reaktionsraums der Vorrichtung zur galvanischen Abscheidung, durchströmt der Förderstrom den Kathodenraum dieses mindestens einen Reaktionsraums.

Gemäß Variante i) wird der Förderstrom mit einem Druck von 1 bis 100 bar, bevorzugt 10 bis 50 bar, besonders bevorzugt 20 bis 25 bar und/oder einer Temperatur von 10 bis 200 °C, bevorzugt 20 bis 170 °C durch den Kathodenraum der elektrochemischen Abscheidevorrichtung des Reaktionsraums mit noch unbeladener Kathode geleitet.

Gemäß Variante ii) wird der Förderstrom mittels Strömungsverteiler durch den Kathodenraum mindestens eines, jedoch nicht aller Reaktionsräume geleitet.

Es wird also immer mindestens ein Reaktionsraum nicht durchströmt.

Je nach Anzahl der Reaktionsräume erfolgt die Führung des Förderstroms durch ein T-Stück, ein Dreiwegeventil oder einen Verteilerstern.

Die Kathode dieses Reaktionsraums ist zum Zeitpunkt der Öffnung des Zulaufs noch unbeladen, das heißt, es sind zu diesem Zeitpunkt in diesem Reaktionsraum keine in dem Förderstrom enthaltenen Metalle und/oder Halbmetalle und/oder Nichtmetalle reduziert und in metallischer oder mineralischer Form auf der Kathode abgeschieden.

Erfindungsgemäß wird in Schritt b) an die elektrochemische Abscheidevorrichtung des durchströmten Reaktionsraums ein elektrischer Strom mit einer Stromstärke von 0,1 bis 1000 A oder einer Stromdichte von 0,01 - 10 mA/cm² angelegt. Die im Katholyten enthaltenen radioaktive, toxische und Scales-bildende reduzierbare Metall- und/oder Halbmetall- und/oder Nichtmetallionen werden dabei zu Metallen oder Halbmetallen und/oder Nichtmetallen reduziert und scheiden sich in metallischer oder mineralischer Form ab.

In einer Ausführungsform wird mittels Differenzdruckmessung die Beladung der Kathode kontrolliert. Durch das Abscheiden der Metalle auf der Kathode verringert sich das Volumen des durchströmten Kathodenraums und der Druck des Förderstroms steigt an. Mittels regelmäßiger Messungen des Systemdrucks wird der Druckanstieg im Kathodenraum detektiert. Dem Fachmann sind Vorrichtungen und Vorgehensweise zur Druckmessung bekannt.

In einer Ausführungsform erfolgt die Abscheidung so lange bis die Kathodenbeladung so hoch ist, dass der Druck in der elektrochemischen Abscheidevorrichtung eine Druckdifferenz zum Druck vor Beginn der Abscheidung von 0,3 bis 2 bar aufweist.

Ist die Kathode des durchströmten Kathodenraums bis zu einer Druckdifferenz 0,3 bis 2 bar beladen, so erfolgt im Schritt c) die Unterbrechung oder Umleitung des Förderstroms in diesem Kathodenraum.

Gemäß Variante i) erfolgt in einer Vorrichtung zur galvanischen Abscheidung mit einem Reaktionsraum die Unterbrechung des Förderstromes wenn die Kathode beladen ist. Gemäß Variante ii) erfolgt in einer Vorrichtung zur galvanischen Abscheidung mit mehreren Reaktionsräumen, bei beladener Kathode des durchströmten Reaktionsraums eine Umleitung des Förderstroms in mindestens einen nächsten Reaktionsraum mit noch unbeladener Kathode und das Durchleiten des Förderstroms durch dessen Kathodenraum und darin Wiederholung von Schritt b).

In einer Ausführungsform erfolgt eine Umleitung des Förderstroms in mindestens einen nächsten Reaktionsraum mit noch unbeladener Kathode desselben Reaktors oder eines baugleichen, strömungsparallel geschalteten Reaktionsraums oder an dem Reaktionsraum vorbei.

In einer Ausführungsform der Variante i) wird der Förderstrom durch gezieltes Schließen des Zulaufs dieses Reaktionsraums unterbrochen und an dem Reaktionsraum vorbeigeleitet.

In einer Ausführungsform der Variante ii) wird der Förderstrom mittels Strömungsverteiler in den Kathodenraum des nächsten Reaktionsraums des Reaktors mit noch unbeladener Kathode gleitet.

In Schritt c) wird der Förderstrom gemäß Variante ii) durch den Kathodenraum des Reaktionsraums mit noch unbeladener Kathode geleitet.

Mit der Durchleitung des Förderstroms durch einen Reaktionsraum mit noch unbeladener Kathode wird Schritt b) darin wiederholt. Die noch unbeladene Kathode wird dabei mit reduzierten Metallen und/oder Halbmetallen und/oder Nichtmetallen in mineralischer oder metallischer Form beladen.

In einer Ausführungsform istdie Polarität von Anode und Kathode jeweils umkehrbar schaltbar. Parallel und/oder im Anschluss an Schritt c) wird in Schritt d) die Kathode des zuvor durchströmten Reaktionsraums regeneriert. In einer Ausführungsform wird die Kathode jedes zuvor durchströmten Reaktionsraums regeneriert.

Die Regeneration geschieht erfindungsgemäß durch Entfernung der auf dessen Kathode in metallischer und/oder mineralischer Form abgeschiedenen Metalle und/oder Halbmetalle und/oder Nichtmetalle entweder
d1) durch Ausbringung des beladenen Kathodenmaterials inklusive der abgeschiedenen Metalle und/oder Metalloide aus dem Kathodenraum und Hinzufügen neuen Kathodenmaterials
   oder
d2) durch Regenerierung des Kathodenmaterials durch Schalten des beladenen Kathodenmaterials als Anode und dessen Behandlung mit einer Mineralsäurelösung, wobei die dabei gewonnene Lösung, enthaltend die gelösten Metalle und/oder Halbmetalle und/oder Nichtmetalle über eine Injektionsbohrung zurück in das Reservoir verbracht wird oder wobei dabei gewonnene Lösung entnommen wird und die Metalle und/oder Halbmetalle und/oder Nichtmetalle durch galvanische Abscheidung oder flüssig-flüssig-Extraktion oder andere dem Fachmann bekannte Methoden zur Gewinnung von in wässrigen Lösungen enthaltenen Metallen oder Halbmetallen und/oder Nichtmetallen gewonnen werden.

Um in Variante d1) das beladene Kathodenmaterial inklusive der abgeschiedenen Metalle und/oder Halbmetalle und/oder Nichtmetalle aus dem zu regenerierenden Reaktionsraum auszubringen, sind am Kathodenraum eines jeden Reaktionsraums durchströmbare Schleusenvorrichtungen angebracht, die als bewegliche Siebe oder bewegliche Lamellen ausgebildet sind, welche intervallmäßig geöffnet werden können, um das mit reduzierten Metallen oder Halbmetallen und/oder Nichtmetallen beladene Kathodenmaterial zu entnehmen.

Das beladene Kathodenmaterial wird erfindungsgemäß dem Kathodenraum des zuvor durchströmten Reaktionsraums entnommen und Untertage entsorgt oder außerhalb der Vorrichtung regeneriert. Über einen separaten Zugang wird neues, unbeladenes Kathodenmaterial in den Kathodenraum eingebracht. Damit ist dieser Reaktionsraum wieder zur Behandlung des Förderstroms einsetzbar.

In Variante d2) wird der Katholyt aus dem Kathodenraum des zuvor durchströmten Segments entfernt und eine Mineralsäurelösung in den Kathodenraum eingebracht.

In einer Ausführungsform ist die Mineralsäurelösung eine wässrige Lösung einer anorganischen Säure, besonders bevorzugt Salz- und/oder Salpetersäure. Bevorzugt weist die Mineralsäurelösung eine Konzentration von 0,1 bis 10 Mol/l, bevorzugt von 1 bis 5 Mol/l auf.

Durch das Einbringen der Mineralsäurelösung werden die metallischen und mineralischen Ablagerungen auf dem Kathodenmaterial wieder aufgelöst und das Kathodenmaterial somit regeneriert. Die Auflösung erfolgt bevorzugt unter Umpolen der Elektroden. Bevorzugt wird dafür ein Potential von + 0,1 - +1,1 V bezogen auf die Standardwasserstoffelektrode angewendet, besonders bevorzugt von +0,3 - +0,7 V.

Nach der Auflösung der Metalle und Minerale wird die zur Auflösung zugeführte und nun mit Metall- und/oder Halbmetall- und/oder Nichtmetall-Ionen beladene Mineralsäurelösung aus dem Kathodenraum und der Vorrichtung entfernt, sodass dieser Kathodenraum zur erneuten Abscheidung zur Verfügung steht.

Zur Gewinnung seltener Metalle wird die gewonnene saure Lösung weiterbehandelt. Bevorzugt wird sie dann zunächst einem elektrochemischen Separationsschritt zugeführt, in dem das radioaktive Blei durch Oxidation zum unlöslichen Bleidioxid entfernt wird. Die nachfolgende Gewinnung der seltenen Metalle erfolgt zweckmäßig in an sich bekannterWeise entweder durch direkte galvanische Abscheidung oder selektive Fällung oder nach vorheriger selektiver flüssig-flüssig-Extraktion.

Die verbleibende Fraktion mit den unerwünschten toxischen Metallen/ Halbmetallen/ Nichtmetallen und NORM-Stoffen einschließlich des wiederaufgelösten radioaktiven Bleidioxids wird nach Rückgewinnung des Großteils der zur Auflösung verwendeten Säure und ggf. nach Einstellung eines bestimmten pH-Wertes durch z.B. Elektrodialyse, Diffusionsdialyse oder vergleichbare bekannte Verfahren zur Re-Injektionspumpe befördert und dort in den Speicherhorizont versenkt.

Erfindungsgemäß erfolgt die Behandlung von Geothermalfluid- oder Formationswasserströmen kontinuierlich. Kontinuierlich im Sinne der Erfindung bedeutet auch, dass die Behandlung kurzzeitig unterbrochen werden kann, sodass nicht sämtliche Flüssigkeit, die gefördert wird, auch behandelt wird, was sich jedoch, in Summe betrachtet, nur geringfügig auf die Qualität des behandelten Förderstroms auswirkt.

Im erfindungsgemäßen Verfahren dauert es in Abhängigkeit von den Konzentrationsverhältnissen bzgl. der reduzierbaren Kationen im Förderstrom des geothermalen Fluids mehrere Tage bis Monate, bis das Kathodenmaterial in dem durchströmten Segment soweit beladen ist, dass dieses regeneriert werden muss. Die Regenerierung des Segments durch die Schritte e1 bzw. e2 nimmt hingegen nur eine bis wenige Stunden in Anspruch. Die Menge der Metalle und/oder Halbmetalle und/oder Nichtmetalle, die in dieser Zeit nicht aus dem Förderstrom entfernt werden, bildet einen vernachlässigbar kleinen Anteil, gemessen an der Gesamtmenge der im erfindungsgemäßen Verfahren aus dem Förderstrom entfernten Metalle und/oder Metalloide. Deshalb kann man auch dann von einer kontinuierlichen Entfernung der Metalle und/oder Halbmetalle und/oder Nichtmetalle aus dem Förderstrom sprechen, wenn zur Regenerierung die Behandlung kurzzeitig unterbrochen werden muss.

In einer Ausführungsform erfolgt das Verfahren zur Aufbereitung von Geothermalfluid- oder Formationswasser- Förderströmen vor deren energetischer Nutzung oder Verbringung in die Umwelt durch kontinuierliche, elektrochemische Abtrennung radioaktiver, toxischer und Scales-bildender reduzierbarer Metall- und/oder Halbmetall- und/oder Nichtmetallionen aus dem Förderstrom mittels einer Vorrichtung zur galvanischen Abscheidung mit i) umfassend eine elektrochemische Abscheidevorrichtung aus Anodenraum mit Anode und Anolyt und Kathodenraum mit Kathode,
mit den Schritten
a) Durchleiten des Förderstroms mit einem Druck von 1 bis 100 bar und/oder einer Temperatur von 10 bis 200 °C durch den Kathodenraum der elektrochemischen Abscheidevorrichtung des Reaktionsraums mit noch unbeladener Kathode oder
b) Anlegen eines regelbaren elektrischen Stroms mit einer Stromdichte von 0,01 - 10 mA/cm² an die elektrochemische Abscheidevorrichtung im durchströmten Reaktionsraum, wobei die in dem Förderstrom enthaltenen Metalle und/oder Halbmetalle und/oder Nichtmetalle reduziert und in metallischer oder mineralischer Form auf der Kathode abgeschieden werden und diese beladen,
c) Unterbrechung des Förderstroms, wenn die Kathode beladen ist
d) Regenerierung des in den Schritten a) und b) durchströmten Reaktionsraums durch Entfernung der auf dessen Kathodenmaterial abgeschiedenen Metalle und/oder Halbmetalle und/oder Nichtmetalle durch
   d.1) Ausbringung des beladenen Kathodenmaterials inklusive der abgeschiedenen Metalle und/oder Metalloide aus dem Kathodenraum und Hinzufügen neuen Kathodenmaterials
      oder
   d.2) Regenerierung des Kathodenmaterials durch Schalten des beladenen Kathodenmaterials als Anode und dessen Behandlung mit einer Mineralsäurelösung, wobei die dabei gewonnene Lösung, enthaltend die gelösten Metalle und/oder Halbmetalle und/oder Nichtmetalle über eine Injektionsbohrung zurück in das Reservoir verbracht wird oder wobei dabei gewonnene Lösung entnommen wird und die Metalle und/oder Halbmetalle und/oder Nichtmetalle durch galvanische Abscheidung oder flüssig-flüssig-Extraktion gewonnen werden,
wobei Anoden- und Kathodenraum jeweils durch eine Anionen- oder Kationenaustauschermembran oder einen porösen Separator voneinander getrennt sind, wobei der Anolyt eine wässrige Lösung anorganischer und/oder organischer oxidierbarer Verbindungen mit einem Redoxpotential unter dem des Redoxsystems Cl⁻/Cl₂ ist, sodass die Bildung von Chlorgas unterdrückt wird, wobei die oxidierbaren Verbindungen während der Abscheidung anodisch oxidiert werden, wobei der Anolyt in einem separaten Kreislauf geführt wird und regeneriert wird, wenn alle oxidierbaren Verbindungen oxidiert sind und wobei die Vorrichtung obertägig oder untertägig in den Förderstrom geschalten ist.

In einer Ausführungsform erfolgt das Verfahren zur Aufbereitung von Geothermalfluid- oder Formationswasser- Förderströmen vor deren energetischer Nutzung oder Verbringung in die Umwelt durch kontinuierliche, elektrochemische Abtrennung radioaktiver, toxischer und Scales-bildender reduzierbarer Metall- und/oder Halbmetall- und/oder Nichtmetallionen aus dem Förderstrom mittels einer Vorrichtung zur galvanischen Abscheidung mit mehreren Reaktionsräumen, umfassend jeweils eine elektrochemische Abscheidevorrichtung aus Anodenraum mit Anode und Anolyt und Kathodenraum mit Kathode, wobei ein Reaktionsraum jeweils mit vorhandenen weiteren baugleichen Reaktionsräumen strömungsparallel geschalten ist,
mit den Schritten
a) Durchleiten des Förderstroms mit einem Druck von 1 bis 100 bar und/oder einer Temperatur von 10 bis 200 °C durch den Kathodenraum der elektrochemischen Abscheidevorrichtung mindestens eines Reaktionsraums mit noch unbeladener Kathode, wobei jedoch mindestens ein Reaktionsraum nicht durchströmt wird,
b) Anlegen eines regelbaren elektrischen Stroms mit einer Stromdichte von 0,01 - 10 mA/cm² an die elektrochemische Abscheidevorrichtung im durchströmten Reaktionsraum, wobei die in dem Förderstrom enthaltenen Metalle und/oder Halbmetalle und/oder Nichtmetalle reduziert und in metallischer oder mineralischer Form auf der Kathode abgeschieden werden und diese beladen,
c) Umleitung des Förderstroms, wenn die Kathode beladen ist, in mindestens einen nächsten Reaktionsraum mit noch unbeladener Kathode und Durchleiten des Förderstroms durch dessen Kathodenraum und darin Wiederholung von Schritt b),
d) Regenerierung des in den Schritten a) und b) durchströmten Reaktionsraums durch Entfernung der auf dessen Kathodenmaterial abgeschiedenen Metalle und/oder Halbmetalle und/oder Nichtmetalle durch
   d.1) Ausbringung des beladenen Kathodenmaterials inklusive der abgeschiedenen Metalle und/oder Metalloide aus dem Kathodenraum und Hinzufügen neuen Kathodenmaterials
      oder
   d.2) Regenerierung des Kathodenmaterials durch Schalten des beladenen Kathodenmaterials als Anode und dessen Behandlung mit einer Mineralsäurelösung, wobei die dabei gewonnene Lösung, enthaltend die gelösten Metalle und/oder Halbmetalle und/oder Nichtmetalle über eine Injektionsbohrung zurück in das Reservoir verbracht wird oder wobei dabei gewonnene Lösung entnommen wird und die Metalle und/oder Halbmetalle und/oder Nichtmetalle durch galvanische Abscheidung oder flüssig-flüssig-Extraktion gewonnen werden,
wobei Anoden- und Kathodenraum jeweils durch eine Anionen- oder Kationenaustauschermembran oder einen porösen Separator voneinander getrennt sind, und wobei der Anolyt eine wässrige Lösung anorganischer und/oder organischer oxidierbarer Verbindungen mit einem Redoxpotential unter dem des Redoxsystems Cl⁻/Cl₂ ist, sodass die Bildung von Chlorgas unterdrückt wird, wobei die oxidierbaren Verbindungen während der Abscheidung anodisch oxidiert werden, wobei der Anolyt in einem separaten Kreislauf geführt wird und regeneriert wird, wenn alle oxidierbaren Verbindungen oxidiert sind, wobei die Vorrichtung obertägig oder untertägig in den Förderstrom geschalten ist.

In einer Ausführungsform erfolgt ein Verfahren zur Behandlung von Geothermalfluid- oder Formationswasser- Förderströmen vor deren energetischer Nutzung oder Verbringung in die Umwelt durch kontinuierliche, elektrochemische Abtrennung radioaktiver, toxischer und Scales-bildender reduzierbarer Metall- und/oder Metalloidionen aus dem Förderstrom mittels einer Vorrichtung zur galvanischen Abscheidung mit mindestens einem Reaktionsraum umfassend je mindestens ein oder mehrere, unabhängig voneinander durchströmbare Segmente, wobei jedes Segment jeweils eine Elektrolysezelle umfasst, welche aus Anodenraum mit Anode und Kathodenraum mit Kathode gebildet wird, wobei die Polarität von Anode und Kathode jeweils umkehrbar ist, wobei der mindestens eine Reaktionsraum mit vorhandenen weiteren baugleichen Reaktionsräumen strömungsparallel geschalten ist
mit den Schritten
a) Durchleiten des Förderstroms durch den Kathodenraum der Elektrolysezelle des mindestens eines Segments mit noch unbeladener Kathode,
b) Anlegen eines regelbaren elektrischen Stroms mit einer Stromdichte von 0,01 - 10 mA/cm² an die Elektrolysezelle im durchströmten Segment, wobei die in dem Förderstrom enthaltenen Metalle und/oder Metalloide reduziert und in metallischer oder mineralischer Form auf der Kathode abgeschieden werden und diese beladen,
c) Unterbrechung des Förderstroms oder Umleitung des Förderstroms in ein nächstes Segment der gleichen Vorrichtung mit noch unbeladener Kathode oder Umleiten des Förderstroms in das mindestens eine Segment mindestens einer strömungsparallel geschalteten baugleichen Vorrichtung,
d) Durchleiten des Förderstroms durch den Kathodenraum mindestens eines nächsten Segments des gleichen Reaktionsraums mit noch unbeladener Kathode oder Durchleiten des Förderstroms durch mindestens ein Segment des mindestens einen strömungsparallel geschalteten baugleichen Reaktionsraums mit noch unbeladener Kathode und darin Wiederholung von Schritt b),
e) Regenerierung des mindestens einen in den Schritten a) und b) durchströmten Segments durch Entfernung der auf dessen Kathodenmaterial abgeschiedenen Metalle und/oder Metalloide durch
   e.1) Ausbringung des beladenen Kathodenmaterials inklusive der abgeschiedenen Metalle und/oder Metalloide aus dem Kathodenraum und Hinzufügen neuen Kathodenmaterials
      oder
   e.2) Regenerierung des Kathodenmaterials durch Schalten des beladenen Kathodenmaterials als Anode und dessen Behandlung mit einer Mineralsäurelösung, wobei die dabei gewonnene Lösung, enthaltend die gelösten Metalle und/oder Metalloide über die Injektionsbohrung zurück in das Reservoir verbracht wird oder wobei die dabei gewonnene Lösung entnommen wird und die Metalle und/oder Metalloide durch galvanische Abscheidung, flüssig-flüssig-Extraktion oder andere dem Fachmann an sich bekannte Methoden gewonnen werden,
wobei die Vorrichtung obertägig oder untertägig in den Förderstrom geschalten ist,
wobei Anoden- und Kathodenraum jeweils durch eine Anionen- oder Kationenaustauschermembran oder einen porösen Separator voneinander getrennt sind, und wobei im Anodenraum ein Anolyt aus einer wässrigen Lösung anorganischer und/oder organischer oxidierbarer Verbindungen vorgelegt ist.

Gegenstand der Erfindung ist auch eine Vorrichtung zur Behandlung von Geothermalfluid- oder Formationswasser- Förderströmen vor deren energetischer Nutzung oder Verbringung in die Umwelt durch galvanische Abscheidung und kontinuierliche elektrochemische Abtrennung radioaktiver, toxischer und Scales-bildender reduzierbarer Metall- und/oder Halbmetall- und/oder Nichtmetall- Ionen aus dem Förderstrom, umfassend i) einen Reaktionsraum, oder ii) mehrere Reaktionsräume, wobei bei mehreren Reaktionsräumen ein Reaktionsraum jeweils mit vorhandenen weiteren baugleichen Reaktionsräumen strömungsparallel geschalten ist, wobei jeder Reaktionsraum
- einen Zulauf und Ablauf
- eine druck- und/oder temperaturbeständige elektrochemische Abscheidevorrichtung mit Anodenraum mit Anode und Anolyt und einem Kathodenraum mit Kathode und
- eine regelbare Stromquelle an jeder elektrochemischen Abscheidevorrichtung, die so ausgelegt ist, dass damit unabhängig voneinander und regelbar an jede elektrochemischen Abscheidevorrichtung ein elektrischer Strom mit einer Stromdichte von 0,01 bis 10 mA/cm² angelegt werden kann und/oder mit der unabhängig voneinander und regelbar an jede elektrochemische Abscheidevorrichtung ein elektrischer Strom von 0,1 bis 1000 mA angelegt werden kann
umfasst,
wobei die einzelnen Zu- und Abläufe unabhängig voneinander geöffnet und geschlossen werden können,
wobei der Zulauf eines Reaktionsraums in dessen Kathodenraum führt und der Kathodenraum einen Ablauf enthält, aus dem der Förderstrom wieder austritt,
wobei Anoden- und Kathodenraum jeweils durch eine Anionen- oder Kationenaustauschermembran oder einen porösen Separator voneinander getrennt sind,
wobei der Anodenraum über einen separaten Zu- und Ablauf verfügt,
wobei im Anodenraum ein Anolyt aus einer wässrigen Lösung anorganischer und/oder organischer oxidierbarer Verbindungen, mit einem Redoxpotential unter dem des Redoxsystems Cl⁻/Cl₂, vorgelegt ist,
wobei jeder Reaktionsraum so ausgelegt ist, dass der Förderstrom mit einem Druck von 1 bis 100 bar und/oder einer Temperatur von 10 bis 300 °C und/oder einem Volumenstrom von 10 bis 100 m³ / h durchgeleitet und aufbereitet werden kann,
wobei die Vorrichtung obertägig oder untertägig in den Förderstrom geschalten ist.

Erfindungsgemäß ist die Vorrichtung zur Behandlung von Geothermalfluid- oder Formationswasser- Förderströmen vor deren energetischer Nutzung oder Verbringung in die Umwelt durch kontinuierliche elektrochemische Abtrennung radioaktiver, toxischer und Scales-bildender reduzierbarer Metall- und/oder Halbmetall- und/oder Nichtmetall-Ionen aus dem Förderstrom geeignet.

Der Vorrichtung ist eine Förderpumpe vorgelagert, die den Förderstrom durch die Vorrichtung hindurch zur energetischen Nutzung obertage fördert. Die Pumpe ist so eingestellt, dass die Strömungsgeschwindigkeit des Förderstroms der abgeforderten Leistung der Anlage, insbesondere der Wärmenachfrage entspricht. Bevorzugt beträgt der Förderstrom 10 bis 100 m³/h.

Erfindungsgemäß enthält der Förderstrom radioaktive, toxische und Scales-bildende reduzierbare Metall- und/oder Halbmetall- und/oder Nichtmetall-Ionen.

In einer Ausführungsform sind die Metall- und/oder Halbmetall- und/oder Nichtmetall-Ionen ausgewählt aus positiv geladenen Ionen der chemischen Elemente Ga, In, Tl, Ge, Sn, Pb, As, Sb, Bi, Se, Te, Po, den Sauerstoff enthaltenden Ionen der chemischen Elemente der Gruppe VII des PSE, den Ionen der chemischen Elemente der Gruppen VIb, VIIb, VIIIb, Ib und IIb sowie den Ionen des Urans.

Die erfindungsgemäße Vorrichtung zur Behandlung von Geothermalfluid- und Formationswasser umfasst mindestens einen Reaktionsraum mit jeweils einer druck- und/oder temperaturbeständigen elektrochemischen Abscheidevorrichtung.

Im Sinne der Erfindung bedeutet druckbeständig, dass die elektrochemische Abscheidevorrichtung so ausgelegt ist, dass sie von der aufzuarbeitenden Flüssigkeit mit einem Druck von 1 bis 100 bar, bevorzugt 5 bis 50 bar, besonders bevorzugt 5 bis 25 bar durchströmt und elektrolytisch behandelt werden kann.

In einer Ausführungsform ist die elektrochemische Abscheidevorrichtung so ausgelegt, dass der Kathodenraum von der aufzuarbeitenden Flüssigkeit mit einem Druck von 1 bis 100 bar, bevorzugt 5 bis 50 bar, besonders bevorzugt 5 bis 25 bar durchströmt und elektrolytisch behandelt werden kann.

Im Sinne der Erfindung bedeutet Temperaturbeständig, dass die elektrochemische Abscheidevorrichtung so ausgelegt ist, dass sie von der aufzuarbeitenden Flüssigkeit mit einer Temperatur von 0 bis 200 °C, bevorzugt 10 bis 170°C durchströmt und elektrolytisch behandelt werden kann.

In einer Ausführungsform ist die elektrochemische Abscheidevorrichtung so ausgelegt, dass der Kathodenraum von der aufzuarbeitenden Flüssigkeit mit einer Temperatur von 0 bis 200 °C, bevorzugt 0 bis 170°C durchströmt und elektrolytisch behandelt werden kann.

Gemäß Variante il) umfasst die Vorrichtung mehr als einen Reaktionsraum, welcher mit weiteren, baugleichen Reaktionsräumen strömungsparallel angeordnet ist und alle Reaktionsräume unabhängig voneinander durchströmbar sind.

Jeder Reaktionsraum umfasst jeweils eine elektrochemische Abscheidevorrichtung mit Kathodenraum mit Kathode und Anodenraum mit Anode.

Als elektrochemische Abscheidevorrichtung bezeichnet man erfindungsgemäß eine Elektrolysezelle mit Kathodenraum mit Kathode und einen Anodenraum mit Anode und Anolyten. Dem Fachmann ist der Aufbau von Elektrolysezellen zur elektrochemischen Abscheidung bekannt.

In einer Ausführungsform befinden sich die Reaktionsräume sich in einem oder in mehreren Reaktoren.

Im Sinne der Erfindung ist ein Reaktor ein Gehäuse, in dem mindestens zwei Reaktionsräume, enthaltend jeweils eine elektrochemische Abscheidevorrichtung aus Anodenraum mit Anode und Anolyt und Kathodenraum mit Kathode, angeordnet sind. Jeder Reaktor verfügt über je einen Haupt-Zu- und Haupt-Ablauf mit Stellventil, welche unabhängig voneinander geöffnet und geschlossen werden können.

In einer Ausführungsform sind mindestens zwei Reaktionsräume innerhalb eines Reaktors angeordnet. Dann verfügt der Reaktor über einen Haupt-Zu- und -Ablauf und jeder einzelne Reaktionsraum zusätzlich über einen eigenen Zu- und Ablauf.

In einer Ausführungsform ist der Hauptzulauf eines Reaktors mit einem Strömungsverteiler versehen, sodass der Förderstrom in den jeweils zu durchströmenden Reaktionsraum über dessen Zulauf geleitet werden kann.

Außerdem wird durch den Zu- bzw. Ablauf vor der Regeneration des Segments die im Kathodenraum verbliebene Flüssigkeit des Förderstroms entfernt, sowie auch die Regenerierlösung eingebracht und wieder entnommen.

In einer weiteren Ausführungsform sind für das Einbringen und Austragen der Regenerierlösung separate Zu- und Abläufe angeordnet.

In einer Ausführungsform ist die Polarität von Anode und Kathode in jeder elektrochemischen Abscheidevorrichtung umkehrbar.

In einer Ausführungsform ist das Kathodenmaterial in der Vorrichtung ausgewählt aus Metallen der Gruppe IVb, Vb, VIb, VIIIb, Ib, IIb, III, IV, des PSE und/oder deren Legierungen untereinander soweit sie unter den Einsatzbedingungen in festem Aggregatzustand vorliegen und/oder Kohlenstoff und/oder Silicide, Nitride und Carbide sowie Boride der vorgenannten chemischen Elemente, und/oder unlegierten, legierten und hochlegierten Stählen, Nickel- und Cobaltbasislegierungen, und/oder Kohlenstoffallotropen.

In einer Ausführungsform ist die Erscheinungsform der Kathode ausgewählt aus Blech in ebener Geometrie, hohler Zylinder bzw. röhrenförmig, Granulat, Gewebe, Drahtgeflecht und/oder dreidimensionales Netzwerk von Metallfilamenten.

In einer Ausführungsform, wenn die Regeneration des Reaktionsraums durch Entsorgung von beladenem Kathodenmaterial erfolgen soll, so ist das Kathodenmaterial nicht statisch in den einzelnen Kathodenräumen angebracht. Vielmehr handelt es sich bei dem mobilen Kathodenmaterial um eine Schüttung von Partikeln aus Kathodenmaterial, die durch die entsprechenden regelbaren Öffnungen entnommen werden können. Die Kathode liegt dabei auf einer durchströmbaren Siebplatte auf, die einen Austrag von Kathodenmaterial verhindert. Ebenso befindet sich oberhalb der Kathode eine solche Platte.

In einer Ausführungsform ist die Kathodenschüttung über die Siebplatte kontaktiert.

In einer Ausführungsform, wenn die Regeneration des Reaktionsraums durch Umpolung von Kathode und Anode und die Behandlung des Kathodenmaterials mittels wässriger saurer Lösung erfolgen soll, so ist das Kathodenmaterial in einer Ausführungsform fixiert. Hierzu ist über dem Strömungsverteiler des Zulaufs des Reaktionsraums wiederum eine durchströmbare Lochplatte angeordnet, über welcher sich die Schüttung aus Granulat, das Drahtgeflecht oder das dreidimensionale Netzwerkt aus Filamenten befindet.

Bevorzugt beträgt die Dicke des Bleches 0.1 bis 10 mm.

In einer bevorzugten Ausführungsform ist die Kathode als ebene oder gewölbte Platte, in Zylinderform oder röhrenförmig im Innenraum des Reaktionsraums ausgebildet. Bevorzugt beträgt dann die Dicke des Bleches 0,1 - 2 mm.

In einer weiteren Ausführungsform ist die Kathode zweiteilig ausgebildet und der äußere Teil der Kathode bildet gleichzeitig die äußere Begrenzung des Reaktionsraums. Der innere Teil der Kathode besteht aus einer Schüttung von Granulat oder aus einem dreidimensionalen Filamentnetzwerk. Bevorzugt ist die äußere Kathode dann in Form eines Hohlzylinders bzw. röhrenförmig ausgebildet.

Bevorzugt beträgt die Dicke des Bleches des äußeren Teils der Kathode dann 2 bis 5 mm. Die so ausgebildete äußere Kathode kann zudem Aussparungen zur Aufnahme weiterer Vorrichtungsteile aufweisen, insbesondere von Strom- und Elektrolytzuführungen.

In diese Aussparungen von zweckmäßigerweise kreisförmiger Geometrie können ferner Dichtungs- und Isolationsbauteile aus elektrisch isolierenden und chemisch sowie thermisch hinreichend beständigen nichtmetallischen Werkstoffen eingebracht sein. Bevorzugt werden hierfür Polytetrafluoroethylen, Polyvinylidenfluorid, Polyetheretherketon, Silikonkautschuk, Viton®, Polyimid verwendet. Die Befestigung der Isolations- und Dichtungsbauteile erfolgt dabei auf zweckmäßige Art und Weise durch Verschraubung, Anpressung und andere dem Fachmann bekannte Befestigungsarten.

Die zur Isolation und zum Anschluss der Anode an die Strom- und Anolytzuführung eingebrachten Bauteile können sich auch durch die innere Kathode hindurch erstrecken.

In einer Ausführungsform ist das Kathodenmaterial ein Granulat. Vorteilhaft kann dieses dem Kathodenraum auf einfache Weise zur Regeneration des Reaktionsraums wieder entnommen werden. Bevorzugt liegt das Granulat in sphärischer Geometrie vor, ausgewählt aus Zylinder, Rotationsellipsoid und/oder Kugel, wobei die Granulate auch hohl sein können.

Bevorzugt beträgt der Durchmesser des Granulats 0.5 bis 10 mm, besonders bevorzugt 1 bis 5 mm.

In einer weiteren Ausführungsform ist das Kathodenmaterial ein dreidimensionale Netzwerk von Metallfilamenten aus Metallfaser- und/oder -folienabschnitten von 0.1 bis 10 mm Breite und 0.001 bis 0.1 mm Dicke, die vorteilhaft dem Kathodenraum zur Regenerierung des Reaktionsraums wieder entnommen werden können.

In einer Ausführungsform besteht die Anode aus Metallen der Gruppe Vlllb des PSE und/oder deren Oxiden und/oder ihren Legierungen untereinander oder aus Allotropen des Kohlenstoffs, aus Bleidioxid, aus Silciumcarbid, aus Titannitrid, Titanborid, aus Chrom, Molybdän, Wolfram, Niob und/oder Tantal und/oder aus Nickel- oder Cobaltbasislegierungen.

In einer Ausführungsform ist die Anode eine Verbundanode, bestehend aus einem chemisch inerten, leitfähigen Trägermaterial, beschichtet mit einer Schicht Anodenmaterial wie oben beschrieben, mit einer Schichtdicke von 0,1 bis 100 µm, bevorzugt 1 bis 50 µm.

In einer Ausführungsform ist die Erscheinungsform der Anode ausgewählt aus Blech, Stab, Rohr, Draht, Drahtgeflecht oder -spirale.

In einer Ausführungsform ist der Anodenraum mit Anode ein Ringraum. Der Ringraum ist innerhalb des Kathodenraums, enthaltend Kathodenmaterial, bevorzugt als Granulat, angeordnet. Der Ringraum ist dann beiderseits durch einen porösen Separator von dem Kathodenmaterial getrennt.

Jeder Reaktionsraum verfügt über einen Haupt-Zu- und Ablaufbereich, der regelbar geöffnet und geschlossen werden kann. Über den Haupt-Zulauf gelangt der Förderstrom in das Innere des Reaktionsraums. Die Endplatten des Reaktionsraums weisen im Bereich des Zu- und Ablaufs Perforationen in Form von Löchern oder Schlitzen auf, die einerseits eine weitgehend ungehinderte Durchströmung ermöglichen, andererseits aber einen unbeabsichtigten Austrag von Granulat oder von Filamenten verhindern.

In einer Vorrichtung gemäß Variante i) mit einem Reaktionstraum bedarf es keines gesonderten Zulaufs in den Kathodenraum des Reaktionsraums.

In einer Vorrichtung gemäß Variante ii) mit mehreren Reaktionsräumen in einem Reaktor ist der Hauptzulauf des Reaktors mit einem Strömungsverteiler verbunden, der den Förderstrom in den für die Behandlung vorgesehenen jeweiligen Reaktionsraum lenkt.

Jeder Reaktionsraum ist mit einem Zu- und Ablauf versehen und unabhängig voneinander durchströmbar. Jeder Reaktionsraum umfasst eine elektrochemische Abscheidevorrichtung.

Erfindungsgemäß umfasst jede elektrochemische Abscheidevorrichtung einen Kathodenraum mit Kathode und einen Anodenraum mit Anode und Anolyt. Der Zulauf des Reaktionsraums führt in dessen Kathodenraum. Ebenso enthält der Kathodenraum einen Ablauf, aus dem der Förderstrom wieder austritt.

In einer Ausführungsform umfasst ein Reaktionsraum eine elektrochemische Abscheidevorrichtung mit einem Kathodenraum einem angrenzenden separaten Anodenraum.

In einer Ausführungsform sind mehrere, bevorzugt mindestens 3 Reaktionsräume kreisförmig in einem Reaktor angeordnet.

Dann ist der Anodenraum zentral angeordnet und mehrere, unabhängig voneinander durchströmbare Kathodenräume grenzen an ihn. In dieser Ausführungsform "teilen" sich also mehrere elektrochemische Abscheidevorrichtungen einen gemeinsamen Anodenraum.

Im untersten Teil des Kathodenraums eines Reaktionsraums befinden sich in einer Ausführungsform von Flüssigkeiten durchströmbare Schleusenvorrichtungen, die als bewegliche Siebe, Lochplatten oder bewegliche Lamellen ausgebildet sind. Die Siebe und Lochplatten bestehen aus elektrisch leitfähigem Material, bevorzugt aus Edelstählen oder Nickelbasislegierungen.

Durch intervallmäßiges Öffnen dieser Schleusen kann mit unerwünschten Scale-bildenden toxischen Schwermetallen, toxischen Halb/Nichtmetallen oder Normstoffen und/oder mit wertvollen Metallen beladenes Granulat entnommen werden. Sofern der Schwerpunkt des Einsatzes auf der Entfernung der genannten unerwünschten Stoffe liegt, können jene über diese oder eine weitere hydraulische Verbindung zur der den Förderstrom führenden Leitung in das Bohrloch abgeworfen werden.

Jede elektrochemische Abscheidevorrichtung ist mit einer unabhängig voneinander und regelbar zu schaltenden Stromquelle verbunden, mit der ein elektrischer Strom von 1 bis 1000 A und/oder mit einer Stromdichte von 0,01 bis 10 mA/cm² an die Abscheidevorrichtung angelegt werden kann. Kathode und Anode sind jeweils mit der Stromquelle verbunden.

In einer Ausführungsform ist die Polarität von Kathode und Anode umkehrbar. Die Kathode kann auch als Anode geschalten werden, die Anode kann auch als Kathode geschalten werden. Dem Fachmann sind entsprechende Anordnungen bekannt.

Anode und Kathode sind jeweils durch eine Kationen- oder eine Anionenaustauschermembran oder durch einen porösen Separator voneinander getrennt.

Die Separatoren sind dabei entweder als Platte oder Folie zwischen jeweils einer Anode und Kathode so angeordnet und in einen Rahmen so eingepasst, dass der zwischen der Anode und dem porösem Separator oder der lonenaustauschermembran befindliche Raum der Vorrichtung hydraulisch dicht von demjenigen abgetrennt ist, der sich zwischen der Kathode und dem porösen Separator oder der lonenaustauschermembran befindet, sodass sich die jeweiligen Elektrolyte innerhalb der Vorrichtung nicht miteinander vermischen können.

Das Gleiche gilt, wenn die Kathode als Hohlzylinder bzw. Rohr oder als sonstige vorzugsweise symmetrische Hohlform ausgebildet ist, wobei sich in dieser Hohlform zusätzlich die genannten Granulate oder dreidimensionalen Netzwerke befinden können. In diesem Falle wird in dieser Hohlform der zylinder- bzw. röhrenförmige Separator vorzugsweise zentralsymmetrisch angeordnet und über geeignete Vorrichtungen, die zugleich eine Abdichtung bewirken, fixiert. Dies kann über Endplatten erfolgen, in die zur Aufnahme des Separators entsprechende Nuten eingearbeitet sind.

Die lonenaustauschermembranen sind bevorzugt auf der Basis von Polytetrafluorethen, Polyvinylidenfluorid oder Polyester gefertigt.

In einer Ausführungsform besteht der poröse Separator aus porösem Kunststoff und/oder porösem keramischen Material mit einer mittleren Porenweite von 0.01 bis 250 µm, bevorzugt 0.1 bis 150 µm, besonders bevorzugt 1 bis 100 µm. Bevorzugt weist der poröse Separator eine Dicke von 0.5 bis 10 mm, besonders bevorzugt 1 bis 8 mm, besonders bevorzugt 1 bis 5 mm auf.

Für Niedertemperaturanwendungen für Förderströme mit Temperaturen bis maximal 70 ° C wird bevorzugt gesintertes Polyethylen oder gesintertes Polyvinylchlorid als poröser Separator verwendet.

Für Temperaturen des Förderstroms bis zu 130 °C besteht der poröse Separator bevorzugt aus gesintertem Polytetrafluoroethen oder Polyvinylidenfluorid.

Für Temperaturen des Förderstroms über 130°C besteht der poröse Separator bevorzugt aus Aluminiumoxid-oder Titandioxid-, Zirkoniumdioxid- oder Siliciumcarbidkeramik. Weiterhin bevorzugt werden auch andere Vertreter aus der Klasse poröser keramischer Werkstoffe als poröser Separator verwendet, die im geothermal- oder Lagerstättenfluid chemisch stabil sind über eine ausreichende mechanische Festigkeit verfügen und nicht elektrisch leitfähig sind. Im Falle der Verwendung einer lonenaustauschermembran ist diese bevorzugt auf einen porösen Stützkörper aufgebracht und umschließt diesen entlang seines Mantels vollständig. Bei dem Stützkörper kann es sich um einen der genannten porösen Kunststoffe oder um ein perforiertes Rohrstück aus Kunststoff oder um eine poröse Keramik oder um ein Metall handeln.

In einer Ausführungsform im Fall der Verwendung eines metallischen perforierten Rohres kann dieses zugleich die Anode darstellen. In diesem Falle wird die Grundplatte, die Anode und Separator oder lonenaustauschermembran aufnimmt, aus einem elektrisch isolierenden Werkstoff gefertigt.

In einer Ausführungsform ist die Anode jedoch auch als Draht, Drahtgewebe, Drahtspirale, oder Stab ausgebildet und ist dann bevorzugt entlang der Mittelachse des vom porösen Separator oder Stützkörper und lonenaustauschermembran und den Endplatten umschlossenen Raumes angeordnet. Die Endplatten enthalten in diesem Bereich mit Anschlüssen für Zu- und Ableitung des Anolyten versehene Öffnungen, durch die im Bedarfsfall ein vom geothermalen Fluid oder vom Formationswasser chemisch verschiedener Anolyt geleitet wird.

Bevorzugt erweitert sich der Durchmesser des zwischen der äußeren Umrandung des Kathodenraums und dem porösen Separator gebildeten Raums. Bevorzugt aber keineswegs ausschließlich nimmt er die Form eines Konus an.

In einer Ausführungsform befinden sich im untersten Teil des Kathodenraums von Flüssigkeiten durchströmbare Schleusenvorrichtungen, die als bewegliche Siebe, durchströmbare Lochplatte oder bewegliche Lamellen ausgebildet sind, welche intervallmäßig geöffnet werden können, um das mit reduzierten Metallen oder Metalloiden beladene Kathodenmaterial zu entnehmen.

Der aus den genannten Anoden, Kathoden und Separatoren bzw. lonenaustauschermembranen einschließlich der erforderlichen Endplatten, Kontaktierung. Dicht- und Befestigungsmittel bestehende Reaktionsraum oder die mehreren Reaktionsräume bilden die erfindungsgemäße Vorrichtung. Diese kann sowohl obertägig als auch untertägig im Förderstrom angeordnet sein oder über geeignete Leitungsführung hydraulisch mit diesem verbunden sein.

In einer Ausführungsform ist sie obertägig in unmittelbarer Nähe des obertägigen Ansatzpunktes der Förderbohrung oder untertägig auf dem Höhenniveau des sogenannten Ringraums der Förderbohrung angeordnet. Eine andere bevorzugte Anordnungsvariante besteht in der Einbringung der Vorrichtung auf oder unterhalb der Höhe des sogenannten Intakes der Förderpumpe.

In einer Ausführungsform wird die Vorrichtung oberhalb der Förderpumpe angeordnet. Dann ist es vorteilhaft entweder diese Förderpumpe in einem sogenannten side-track anzuordnen. Weiterhin ist bevorzugt ein zur Aufnahme des Scale-beladenen Kathodenmaterials dienender side-track installiert. Bevorzugt ist vor der Pumpe am Abgang des side-tracks ein Blendenbauteil angeordnet, welches das beladene Granulat in den dafür vorgesehenen unterirdischen Hohlraum ableitet. Ist es vorgesehen, die Entsorgung des beladenen Kathodenmaterials im side-track vorzunehmen, werden bevorzugt ebenfalls die vorgenannten Siebe, Gitter oder Lamellen verwendet, die vorzugsweise mit einer Neigung von 30 - 60° gegenüber der Rohrachse angeordnet sind.

Ist die Förderpumpe im side-track angeordnet, so ist das Blendenbauteil wandungsparallel im aufsteigenden Teil der Förderbohrung unmittelbar im Bereich des Abgangs des side tracks angeordnet.

Die beladenen Granulate oder Filamente werden je nach bevorzugtem Betriebsregime kontinuierlich oder aber in diskreten Zeitabständen durch Öffnen und Schließen der besagten Schleusenvorrichtung in die Förderbohrung geleitet.

In einer Ausführungsform lassen sich die durchströmbaren Schleusenvorrichtungen zu einem, mit einem Blendenbauteil abgegrenzten, side-track des Bohrlochs öffnen.

In einer Ausführungsform ist für den kontinuierlichen Betrieb der Vorrichtung diese im Bereich des Kathodenraumes mit einer Nachfüllöffnung für Kathodenmaterial, wie Granulat oder Filamente versehen.

In einer weiteren Ausführungsform ist im Bereich der Kathode wie der Granulatschüttung oder des dreidimensionalen Filamentnetzwerkes mindestens eine Sonotrode mit einer Leistungsaufnahme von 0,01 - 10 kW, bevorzugt von 0,1 - 2 kW angeordnet. Diese kann bevorzugt in Intervallen zugeschaltet werden, um durch den Eintrag von vibrationsbedingten Relativbewegungen der Partikeln gegenüber der Wandung des Kathodenraums, gegenüber benachbarten Partikeln und gegenüber der flüssigen oder einer gasförmigen Phase einen verbesserten Austrag von beladenem Granulat oder Filamenten zu erreichen.

Vorteilhaft wird durch Einsatz der Sonotrode auch der Stoffübergang an partikulärem oder filamentartigem Kathodenmaterial bei der elektrochemischen Reduktion der Metalle- und/oder Metalloide verbessert.

In einer Ausführungsform ist die Vorrichtung untertägig oberhalb der Förderpumpe im Ringraum der Förderbohrung angeordnet.

In einer Ausführungsform umfasst die Vorrichtung einen Reaktionsraum mit unabhängig voneinander öffnen- und schließbarem Haupt-Zu- und Haupt-Ablauf, der eine Elektrolysezelle aus Anodenraum mit platinbeschichteter Anode und Kathodenraum mit Granulat aus Graphit, sowie eine regelbare Stromquelle umfasst, die so ausgelegt ist, dass damit ein elektrischer Strom mit einer Stromdichte von 0,01 bis 10 mA/cm² angelegt werden kann, wobei die Polarität von Anode und Kathode jeweils umkehrbar schaltbar ist, wobei Anoden- und Kathodenraum durch eine Kationenaustauschermembran voneinander getrennt sind, wobei im Anodenraum eine wässrigen Lösung von Isopropanol vorgelegt ist, wobei der Reaktionsraum mit einem weiteren baugleichen Reaktionsraum strömungsparallel und geschaltet ist und im Tandembetrieb geführt wird, und wobei die Vorrichtung untertägig oberhalb der Förderpumpe im Ringraum der Förderbohrung angeordnet ist.

In einer Ausführungsform ist die Kathode zweiteilig, wobei die innere Kathode als Granulatschüttung und/oder Filamentnetzwerk angeordnet ist sowie die äußere Kathode als Rohr oder symmetrische Hohlform, über die der Stromeintrag in die Schüttung/das Netzwerk aus Filamenten erfolgt. Dabei ist die Anordnung des Anodenraums ringförmig in der Schüttung, beidseits begrenzt durch Separator, wobei sich Granulat und/oder Filamente sowohl im Raum zwischen dem ringförmigen Anodenraum und der äußeren Kathode als auch im Inneren des vom ringförmigen Anodenraum umgrenzten Volumens befinden und wobei der Anodenraum durch einen der zuvor genannten Separatoren vom Kathodenraum getrennt ist. In einer Ausführungsform ist die Vorrichtung zur Behandlung von Geothermalfluid- oder Formationswasser- Förderströmen vor deren energetischer Nutzung oder Verbringung in die Umwelt durch kontinuierliche elektrochemische Abtrennung radioaktiver, toxischer und Scales-bildender reduzierbarer Metall- und/oder Metalloidionen aus dem Förderstrorr geeignet, umfassend mindestens einen Reaktionsraum zur galvanischen Abscheidung, wobei der mindestens einen Reaktionsraum mit vorhandenen weiteren baugleichen Reaktionsräumen strömungsparallel geschalten ist, wobei jeder Reaktionsraum
- einen Haupt-Zu- und Haupt-Ablauf,
- mindestens ein unabhängig voneinander durchströmbares mit jeweils Zu- und Ablauf versehenes Segment mit einer Elektrolysezelle mit je einem Anodenraum mit Anode und einem Kathodenraum mit Kathode
   und
- eine regelbare Stromquelle an jeder Elektrolysezelle, mit der unabhängig voneinander und regelbar an jede Elektrolysezelle ein elektrischer Strom von 0,1 bis 1000 mA angelegt werden kann,
umfasst, wobei die einzelnen Zu- und Abläufe unabhängig voneinander geöffnet und geschlossen werden können, wobei die Polarität von Anode und Kathode jeweils umkehrbar ist, wobei Anoden- und Kathodenraum jeweils durch eine Anionen- oder Kationenaustauschermembran oder einen porösen Separator voneinander getrennt sind, wobei im Anodenraum ein Anolyt aus einer wässrigen Lösung anorganischer und/oder organischer oxidierbarer Verbindungen vorgelegt ist, wobei die Vorrichtung obertägig oder untertägig in den Förderstrom geschalten ist.

Zur Realisierung der Erfindung ist es auch zweckmäßig, die vorbeschriebenen Ausführungsformen und einzelne Merkmale der Ansprüche zu kombinieren.

Nachfolgend wird die Erfindung durch Ausführungsbeispiele und Figuren näher beschrieben, ohne jedoch darauf beschränkt zu werden.

Dabei zeigen:

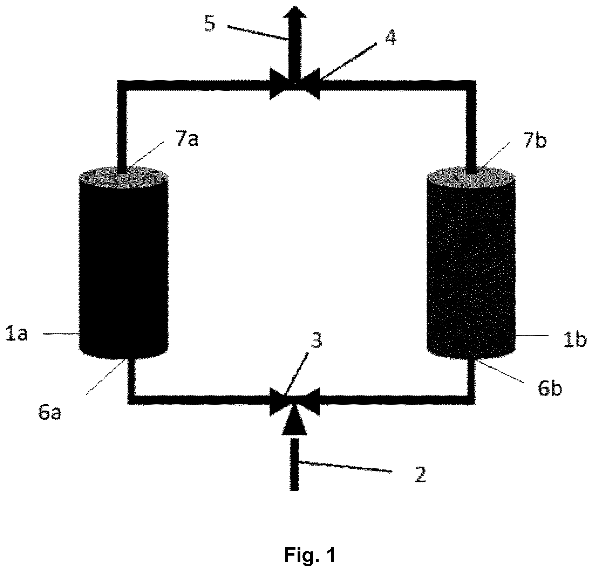

**Fig. 1** - Schematische Anordnung zweier baugleicher Reaktionsräume (1a, 1b), die im Tandembetrieb eingesetzt werden. Das heißt, während in einem Reaktionsraum die Behandlung des Förderstroms abläuft, wird der andere regeneriert.

Durch den Haupt-Zulauf (2) wird der Flüssigkeitsstrom über ein Stellventil (3) über den geöffneten Zulauf (6a) in den Kathodenraum eines der Reaktionsräume (1a), geführt. In diesem Reaktionsraum läuft die elektrochemische Abscheidung ab, die die Flüssigkeit behandelt. Reaktionsraum 1 b wird währenddessen nicht durchströmt.

Über den geöffneten Ablauf (7a) wird die behandelte Flüssigkeit über ein Stellventil (4) dem Ablauf (5) zugeführt.

Ist die Kathode von Reaktionsraum (1a) beladen, wird der Flüssigkeitsstrom über das Stellventil (3) nun über den nun geöffneten Zulauf (6b) in den Kathodenraum des Reaktionsraums (1b) geführt. Der Zulauf (6a) und Ablauf (7a) dabei sind geschlossen. Die in Reaktionsraum (1b) behandelte Flüssigkeit wird über den Ablauf (7b) über ein Stellventil (4) dem Ablauf (5) zugeführt.

Wird der Reaktionsraum (1b) durchströmt, erfolgt parallel die Regenerierung des Reaktionsraums (1a) durch Entfernung der abgeschiedenen Metalle und Minerale von der Kathodenoberfläche durch Verklappen des Kathodenmaterials oder durch Auflösen der Abscheidungen mittels mineralischer Säure.

Nach der Regeneration des Reaktionsraums (1a) ist dieser wieder bereit für die Behandlung des Flüssigkeitsstroms, während die Kathode des Reaktionsraums (1b) regeneriert wird.

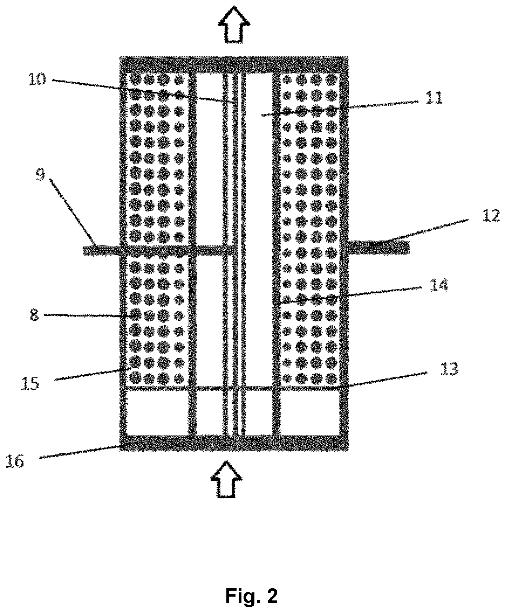

**Fig. 2** - Schematische Darstellung des Aufbaus eines Reaktionsraums. Die Pfeile geben die Fließrichtung des Flüssigkeitsstroms an.

Die Flüssigkeit strömt durch Strömungsverteiler in der Bodenplatte (16) des Reaktionsraums in den Kathodenraum (15). Im Kathodenraum befindet sich eine Kathodenschüttung (8), beispielsweise Granulat, die durch eine Siebplatte (13) getragen wird. Die Anode (10) ist zentral im Anodenraum (11), in dem sich auch der Anolyt befindet, angeordnet. Die Anode wird durch den Anodenkontakt (9) von außen kontaktiert. Der Anodenraum ist durch einen Separator (14) vom Kathodenraum getrennt. Die Kathodenschüttung wird durch den Kathodenkontakt (12) von außen kontaktiert.

Die Zu- und Abläufe für die Regenerierlösung bzw. Schleusen für das Austragen der Granulatschüttung sind nicht mit verzeichnet.

### Ausführungsbeispiel 1

Es wurde eine synthetische Thermalsole / synthetisches Formationswasser hergestellt, deren bzw. dessen chemische Zusammensetzung wie folgt zu beschreiben ist (Tabelle 1):

**Tabelle 1: chemische Zusammensetzung von synthetischer Thermalsole / synthetischem Formationswasser**

| Stoff | Gehalt in g/l |
|---|---|
| NaCl | 172 |
| NaHCO₃ | 25 |
| CaSO₄ | 1,0 |
| SrCl₂ | 0,5 |
| FeSO₄ | 0,1 |
| NH₄Cl | 0,08 |
| MnSO₄ | 0,05 |
| PbCl₂ | 0,001 |
| As₂O₃ | 0,001 |
| Cd(CH₃COO)₂ | 0,001 |
| TlNO₃ | 0,001 |

Dieser Elektrolyt wird nachfolgend als Katholyt bezeichnet.

Weiterhin wurde als Anolyt eine 1 molare wässrige Lösung von Natriumnitrat verwendet.

Je ein Liter von Anolyt und des Katholyten gemäß Tabelle 1 wurden in chemisch inerte Vorlagegefäße eingefüllt. Die beiden Vorlagegefäße wurden in einem Badthermostaten untergebracht und erwärmt.

Zusätzlich waren die Vorlagegefäße mit Zu- und Ableitungen aus PTFE-Schlauch verbunden und mit einem Deckel versehen. Die Ableitungen waren an die Saugseite jeweils einer Pumpe für Anolyt und Katholyt angeschlossen. Über die Pumpen wurden Anolyt und Katholyt in den Anoden- bzw. Kathodenraum einer elektrochemischen Abscheidevorrichtung bzw. Elektrolysezelle gefördert. Die verwendete Elektrolysezelle ist von der in der Patentschrift DE 10 2004 026 447 B4 beschriebenen abgeleitet.

Über den Ablauf von Kathoden- bzw. Anodenraum und entsprechende Schlauchleitungen aus PTFE gelangten die Elektrolytlösungen wieder in die entsprechenden Vorlagegefäße.

Die Elektrolysezelle war mit einer 100 cm² großen und 1 mm dicken Kathode aus einem Edelstahlblech der Stahlsorte 1.4571 und mit einer gleichfalls 100 cm² großen und 1 mm dicken Anode aus Titanblech versehen, wobei das Titanblech mit einer 10 µm starken Schicht eines Pt-W-Mischoxids beschichtet war. Zwischen Anode und Kathode war eine Kationenaustauschermembran des Typs MA 3470 so angeordnet, sodass beide Elektrolyträume vollständig voneinander getrennt waren. Das Volumen des Kathodenraums lag bei 15 cm³. Rückseitig der Anode und Kathode befanden sich Kontaktierungen, die über entsprechende Dichtungssysteme aus dem aus PVDF bestehenden Zellengehäuse herausgeführt und die an die elektrischen Abgänge einer regelbaren Gleichstromquelle angeschlossen waren.

Nachdem Anolyt und Katholyt auf eine Temperatur von 95 °C erwärmt und die jeweiligen Elektrodenräume der Elektrolysezelle befüllt waren, wurde bei ständiger Elektrolytzirkulation die Abscheidung begonnen.

Dazu wurde der Abscheidestrom auf 100 mA eingestellt, woraufhin sich eine Zellspannung von 2,0 - 2,4 V einstellte. Aus dem Katholytstrom, dessen Volumenstrom auf Werte von 1 - 6 l/h eingestellt wurde, wurden über einen Probenahmeport, ausgebildet in Form eines Dreiwegehahns, in regelmäßigen Zeitabständen Proben für die chemische Analytik auf Kationen gemäß DIN EN ISO 17294-2 entnommen.

Am Ende des Abscheideversuchs wurden Anolyt und Katholyt in die jeweiligen Vorlagegefäße zurückgepumpt und aus beiden Gefäßen nochmals Proben für die chemische Analytik auf Kationen entnommen. Während sich aus der Analyse des Anolyten keine Anhaltspunkte für das Vorliegen der toxischen Metalle/Metalloidionen in Konzentrationen oberhalb des Blindwertes der ursprünglichen Natriumnitratlösung ergaben, wurden die Konzentrationen der vorgenannten Ionen im Katholyten signifikant infolge kathodischer Abscheidung erniedrigt. In Tabelle 2 sind die ermittelten Umsätze in Bezug auf die jeweiligen Ausgangskonzentrationen in Abhängigkeit von der Elektrolysedauer zusammengefasst.

**Tabelle 2: Zeitabhängige Umsetzung bei der Abscheidung von As, Cd, Pb und Tl aus synthetischem Geothermalfluid bzw. synthetischem Formationswasser**

| Versuchsdauer (h) | Umsätze X (%) | | | |
|---|---|---|---|---|
| | As | Cd | Pb | Tl |
| 0,33 | 2 | 12 | 19 | 6 |
| 0,66 | 18 | 35 | 42 | 20 |
| 1 | 25 | 74 | 65 | 60 |
| 3 | 55 | 85 | 90 | 82 |

### Ausführungsbeispiel 2

Unter Verwendung des in Ausführungsbeispiel Nr. 1 beschrieben Versuchsaufbaus, jedoch im Unterschied dazu unter Verwendung einer Kathode aus einem Granulat aus Naturgraphit von 5 mm mittlerem Durchmesser, kontaktiert über ein 100 cm² großes Nickelblech und einer Anode aus einem 100 cm² großen und 1 mm dicken Titanblech, das mit einer 12 µm dicken Pt-Schicht an der zur lonenaustauschermembran weisenden Oberfläche versehen war, sowie unter Verwendung einer Anionenaustauschermembran vom Typ MA 3475 an Stelle der Kationenaustauschermembran, wurde der Abscheidungsversuch gemäß Ausführungsbeispiel Nr. 1 wiederholt.

Zusätzlich wurden dem Katholyten gemäß Tabelle 1 die folgenden Verbindungen vor Beginn des Versuchs so hinzugefügt, dass deren Konzentration in gelöster Form im Katholyten folgende Werte aufwies: CuSO₄ - 10 mg/l, In₂(SO₄)₃ - 1 mg/l, Na₂TeO₂ - 1 mg/l, PdCl₂ - 1 mg/l, AgNO₃ - 1 mg/l. Tabelle 3 weist die erzielten Umsätze bei der kathodischen Abscheidung aus.

**Tabelle 3: Zeitabhängige Umsetzung bei der Abscheidung von As, Cd, Pb Tl sowie von Ag, Cu, In, Pd und Te aus synthetischem Geothermalfluid bzw. synthetischem Formationswasser**

| chemisches Element | Umsätze X in % in Abhängigkeit von der Versuchsdauer | | |
|---|---|---|---|
| | 0,33 h | 0,66 h | 1 h |
| As | 2 | 42 | 68 |
| Cd | 26 | 47 | 89 |
| Pb | 52 | 92 | 98 |
| Tl | 11 | 27 | 75 |
| Ag | 54 | 76 | 93 |
| Cu | 25 | 37 | 83 |
| In | 48 | 65 | 74 |
| Pd | 39 | 72 | 78 |
| Te | 43 | 40 | 84 |

Als Anolyt diente bei diesem Versuch eine Mischung von 0,1 l Isopropanol mit 0,9 l 1 molarer NaNO₃-Lösung. Im Anolyten ließen sich auch nach diesem Versuch keine gegenüber den jeweiligen Blindwerten erhöhten Konzentrationen der in Tabelle 3, Spalte 1 genannten Metallionen feststellen.

Nachfolgend wurde der Katholyt aus der Elektrolysezelle entfernt und an Stelle dessen eine 3 molare HNO₃-Lösung eingefüllt, die das Volumen des Kathodenraumes ausfüllte. Sodann wurde diese Lösung auf 60°C erwärmt und das Graphitgranulat 30 min damit gespült, wobei das Granulat nun als Anode geschaltet war. Nachfolgend wurde diese salpetersaure Lösung wieder aus der elektrochemischen Abscheidevorrichtung bzw. Elektrolysevorrichtung entfernt und als Anolyt in eine zweite Elektrolysezelle eingebracht, die mit der in Ausführungsbeispiel Nr. 1 beschriebenen identisch war. Als Katholyt diente in diesem Falle eine 0,1 molare HNO₃-Lösung. Nachfolgend wurde bei einer Zellspannung von 5 V 30 min lang elektrolysiert, der Anolyt entnommen und analysiert. Die Bleikonzentration wurde dabei zu 0,022 mg/l ermittelt. Bei der Demontage der genannten 2. Abscheidevorrichtung wies die zuvor graue Anodenoberfläche einen braunen Belag auf. Dieser Belag ließ sich durch Auflösen in Wasserstoffperoxid-haltiger HNO₃ rasch entfernen.

### Ausführungsbeispiel 3:

Für dieses Ausführungsbeispiel wurde eine geothermales Fluid genutzt, das aus ca. 3800 m Tiefe aus einer Bohrung im Norddeutschen Becken mit der Bezeichnung E GrSK 3/90 gewonnen wurde. Hinsichtlich seiner chemischen Zusammensetzung ist es durch die Konzentrationsangaben in Tabelle 4, Spalte 2 charakterisiert, wobei besagtes Fluid weitere, in der Tabelle nicht genannte Bestandteile anorganischer und organischer Natur enthält, speziell die Elementverbindungen und/oder Ionen aller natürlich vorkommenden chemischen Elemente des PSE.

Für die Abscheidung wurde eine Elektrolysezelle analog der in Ausführungsbeispiel Nr. 2 beschriebenem verwendet, jedoch lag die Abmessung der verwendeten Anode und der verwendeten Feeder-Kathode bei 100 mm x 500 mm. Weiterhin wurden Vorlagegefäße mit je 2,5 l Inhalt verwendet, die gleichfalls thermostatiert wurden.

An Stelle des Granulates aus Naturgraphit befanden sich im Zwischenraum *zwischen äußerer Feeder-Kathode* aus dem Edelstahl mit der Werkstoffnummer 1.4462 und Anionenaustauschermembran Stahlkugeln von 2,5 - 4 mm Durchmesser aus dem Edelstahl mit der Werkstoffnummer 1.4301 und bildeten auf diese Weise die die Kathode. Als Anolyt wurde eine 1 molare Sodalösung verwendet. Nachdem die beschriebene Vorrichtung zur Abscheidung der Ionen der toxischen Metalle/Metalloide, NORM-Stoffe und seltenen chemischen Elemente befüllt war und die Stromzuführungen von Anode und Kathode an die elektrischen Abgänge einer regelbaren Gleichspannungsquelle angeschlossen waren, wurde die nominelle Stromdichte an der Feeder-Kathode auf 10 mA/cm² eingeregelt, worauf hin sich eine Zellspannung von 2,8 - 3,2 V zwischen Anode und Kathode der Vorrichtung einstellte. Der an der Pumpe eingestellte Volumenstrom des geothermalen Fluids lag bei 25 l/h. Nach einer Stunde wurde der Versuch beendet und die Vorrichtung durch Umschalten der Förderrichtung der jeweiligen Pumpen entleert. Aliquote von Katholyt und Anolyt wurden anschließend entnommen und eine chemischen Analyse in der bereits beschriebenen Art und Weise durchgeführt. Die mit den abgeschiedenen toxischen Metallen, NORM-Stoffen und seltenen Metallen beladenen Kugeln wurden über eine verschließbare Öffnung in der Unterseite des die Kathode umgebenden Zellenrahmens entnommen. Um dies zu erleichtern, war an der äußeren Wandung des Kathodenraums eine Sonotrode mit einer Leistung von 50 W angeordnet, die in Intervallen von 5 s bis 30 s Dauer zugeschaltet wurde. Die Anordnung der Sonotrode erfolgte so, dass ein direkter Übergang der mechanischen Schwingung auf die Vorrichtung gegeben war.

Die bei der Abscheidung der besagten toxischen Metalle/Metalloide, NORM-Stoffe und seltenen Metalle aus dem genannten Geothermalfluid erhaltenen Umsätze sind Tabelle 4, Spalte 3 zu entnehmen.

**Tabelle 4: Angaben zur stofflichen Zusammensetzung von Geothermalfluid aus der Bohrung E GrSK 3/90 und erzielte Umsätze bei der Abscheidung von toxischen Metallen/Metalloiden, NORM-Stoffen und seltenen Metallen**

| chemisches Element/ Ion | Konzentration im Geothermalfluid im mg/l | Abscheidung in der Vorrichtung in % |
|---|---|---|
| K | 3130 | n.g.* |
| Na | 387.000 | n.g.* |
| NH₄⁺ | 200 | n.g.* |
| Ca | 56.500 | 2,5* |
| Fe²⁺ | 210 | 3,8 |
| Ba | 49 | 0,5 |
| Sr | 1.550 | 1,3 |
| B | 106 | n.g.* |
| Cl | 160.400 | n.g.* |
| Br | 306 | n.g.* |
| SO₄²⁻ | 199 | 0,6 |
| SiO₂ | 93 | 0,8 |
| HCO₃⁻ | 225 | n.g.* |
| Co | 0,5 | 73 |
| Ni | 9,6 | 89 |
| Cu | 135 | 98 |
| Ga | 0,002 | 50 |
| Pd | 1,2 | 99 |
| Ag | 0,04 | 93 |
| Cd | 1,32 | 94 |
| Au | 0,16 | 62 |
| Sb | 0,007 | 53 |
| Tl | 0,66 | 86 |
| Pb (Pb-207) | 225 | 99 |

| | | |
|---|---|---|
| n.g.: nicht gemessen | | |

### Ausführungsbeispiel 4

An der Geothermiebohrung mit der Bezeichnung Gt NG 1/88 wird aus ca. 2.200 m Tiefe ein geothermales Fluid gefördert, dessen chemische Zusammensetzung durch die Konzentrationsangaben in Tabelle 5, Spalte 2 auszugsweise beschrieben ist. Die Temperatur am Kopf der Fördersonde beträgt 88 - 95 °C, der Förderdruck liegt bei ca. 5 - 8,5 bar. Unmittelbar über dem Fördersondenkopf befinden sich absperrbare Zu-und Abgänge an die Förderleitung im Nenndurchmesser 40 mm, über die das geothermale Fluid durch eine komplexer aufgebaute Testapparatur hindurch gleitet wird, deren Aufbau in der DE 2012 223 390.3 näher beschrieben ist. Diese Apparatur arbeitet folglich auf dem Druck- und Temperaturniveau des Förderstroms von 5 - 8,5 bar bei 88-95°C und die zur Abscheidung dienende Vorrichtung ist hierbei im Förderstrom nahe des Sondenkopfes angeordnet. Sie verfügt u.a. über einen von den übrigen Bestandteilen elektrisch isolierten Reaktionsraum mit einem Innendurchmesser von 156 mm, der wiederum mit technischen Komponenten zur Aufnahme und zum Anschluss von elektrochemischen Elektroden an äußere Spannungsquellen sowie zur Aufnahme und Befestigung der Elektroden selbst ausgestattet ist. Bzgl. weiterer Einzelheiten wird auf die vorgenannte Anmeldeschrift verwiesen.

Im Inneren des Reaktors waren entlang der Wandung drei getrennte Kathodensegmente angeordnet, von denen eines als mit einer 10 µm dicken Schicht aus Pt beschichtetes Ti-Blech von 1 mm Dicke, eine weitere in Form eines Bleches aus 2 mm dickem Edelstahl mit der Werkstoffbezeichnung 1.4539 und ein drittes Segment aus Naturgraphit von 5 mm Dicke ausgeführt war.

Alle Segmente hatten die Abmessung 50 mm x 150 mm. Zur Befestigung waren diese Kathodenelemente auf Haltebolzen aufgeschraubt, die gleichzeitig der elektrischen Stromzuführung dienten. In der Mitte des Reaktors war an einem weiteren Aufnahme- und Kontaktbolzen ein poröses Rohr aus dem Werkstoff Polytetrafluorethen mit einer mittleren Porenweite von 50 µm befestigt. Um dieses poröse Rohr mit 1,5 mm Wandstärke herum war unmittelbar auf diesem Rohr aufliegend eine Kationenaustauschermembran befestigt, deren oberes und unteres Ende in die Endplatten so eingelassen waren, dass ein Durchtritt von Elektrolyt nicht möglich war. Dieses poröse Rohr war oben und unten mit Endplatten verschlossen und sein Inneres bildete den Anodenraum. In seinem Inneren befand sich eine Schüttung aus Quarzsand mit einem Partikeldurchmesser < 2,0 mm. Das zwischen den Quarzsandpartikeln befindliche Hohlraumvolumen war mit einem Anolyten bestehend aus einer Mischung von 1 Teil 1 molarer Natriumnitratlösung und zwei Teilen Isopropanol als Anolyt gefüllt. Die Befüllung erfolgte vor Beginn des Abscheideversuchs. In diese Endplatten war eine Anode in Form eines mit Pt-Draht von 0,5 mm Durchmesser umwickelten Stabes aus dem Werkstoff PEEK eingelassen. Die Anode befand sich mithin mittig entlang der Rotationsachse des Reaktors. Die drei separaten Kathodenräume "teilten" sich diesen Anodenraum.

Die Spirale aus Platindraht war elektrisch leitend mit dem als Stromzuführung dienenden Haltbolzen des porösen Separators verbunden. Die Kathoden und die Anode wurden an drei separate Gleichstromquellen (eine pro Kathode) angeschlossen und nach Inbetriebnahme der Testeinrichtung bei einem Volumenstrom von 0,75 - 1,35 m³/h mit einer kathodischen Stromdichte von jeweils 0,1 mA/cm² betrieben.

Nach 150 h wurde die Abscheidung beendet, die Kathoden aus der Vorrichtung entnommen und das abgeschiedene Material mechanisch von den Kathodenoberflächen entfernt. Nachfolgend wurde das so gewonnene Material bei 105°C bis zur Gewichtskonstanz getrocknet und gewogen. Eine Teilmenge von jeweils 5 g des abgeschiedenen Materials wurde sodann einer γ-spektrommetrischen Untersuchung zugeführt, eine weitere Teilmenge von je 1 g wurde mit Königswasser aufgeschlossen und auf verschiedene chemische Elemente analysiert. Die dabei erhaltenen Ergebnisse sind in Tabelle 5 zusammengefasst.

**Tabelle 5: Konzentration chemischer Elemente in Thermalsole aus der Bohrung Gt NG 1/88, Massenzusammensetzung der elektrochemisch abgeschiedenen Scales und Radionuklid(NORM)-Gehalte in den Scales**

| chemisches Element | Gehalt im geothermalen Fluid (mg/l) | Gehalt im abgeschiedenen Scale (Masse-%) oder in Bq/g | | |
|---|---|---|---|---|
| | | Pt-beschichtete Kathode | Kathode aus Naturgraphit | Kathode aus 1.4539 |
| As | 0,035 | 0,65 | 2,5 | 0,32 |
| Cd | 0,003 | 0,03 | 0,04 | 0,02 |
| Cu | 0,20 | 1,3 | 1,8 | 0,9 |
| In | 0,022 | 1,2 | 2,1 | 0,6 |
| Te | 0,035 | 1,6 | 2,7 | 1,0 |
| Tl | 0,039 | 1,7 | 2,2 | 0,3 |
| Pb | 0,67 | 61 | 74,3 | 65,1 |
| Ca | 8.610 | 14 | 8,2 | 23 |
| Fe | 65 | 5,5 | 6,2 | 8,6 |
| Pb-210 | <0,05 Bq/l | 416 Bq/g | 455 Bq/g | 393 Bq/g |
| Po-210 | <0,05 Bq/l | *n.g. | 280 Bq/g | *n.g. |
| Ra-226 | <0,05 Bq/l | 83 Bq/g | 110 Bq/g | *n.g. |
| Th-228 | <0,05 Bg/l | *n.g. | 75 Bq/g | *n.g. |

| | | | | |
|---|---|---|---|---|
| *n.g.: nicht gemessen | | | | |

### Ausführungsbeispiel 5

Mit der Abscheidevorrichtung gemäß Ausführungsbeispiel 4 wurde ein weiterer Abscheideversuch durchgeführt. Dabei wurde im Gegensatz zu dem bezeichneten Beispiel der Aufbau der Vorrichtung insoweit verändert, dass die obere und untere Endplatte des im Zentrum befindlichen porösen Rohres durch Lochscheiben ersetzt wurden, wobei die nun verwendeten Endplatten jeweils 8 kreisförmige Durchbrüche von 2 mm Durchmesser aufwiesen, durch die das Geothermale Fluid hindurchströmen konnte. Weiterhin war nun in dieses Rohr keine Sandschüttung eingebracht. Die Abscheidung erfolgte unter ansonsten gleichen Bedingungen wie zuvor beschrieben. Nach 130 h Dauer wurde der Versuch beendet und die Vorrichtung demontiert. Im Bereich der Anode hatte sich dabei in größerer Menge ein rötlich-brauner poröser Niederschlag abgeschieden, der It. chemischer Analyse zu mehr als 90 % aus Eisen und zu 2,5 % aus Arsen bestand.

### Bezugszeichen

1) Reaktionsräume (1a), (1b)
2) Hauptzulauf des Flüssigkeitsstroms
3) Stellventil Zulauf
4) Stellventil Ablauf
5) Haupt-Ablauf
6) Zuläufe der Reaktionsräume (6a), (6b)
7) Abläufe der Reaktionsräume (7a), (7b)
8) Kathodenschüttung
9) Anodenkontakt
10)Anode
11)Anodenraum
12) Kathodenkontakt
16) Bodenplatte des Reaktionsraums mit Strömungsverteiler
14) Separator
15) Kathodenraum
13) Siebplatte

## Patentansprüche

1. Verfahren zur Behandlung von Geothermalfluid- oder Formationswasser-Förderströmen
vor deren energetischer Nutzung oder Verbringung in die Umwelt durch kontinuierliche, elektrochemische Abtrennung radioaktiver, toxischer und Scales-bildender reduzierbarer Metall- und/oder Halbmetall- und/oder Nichtmetallionen aus dem Förderstrom
mittels einer Vorrichtung zur galvanischen Abscheidung mit i) einem oder ii) mehreren Reaktionsräumen, umfassend jeweils eine druck- und/oder temperaturbeständige elektrochemische Abscheidevorrichtung aus Anodenraum mit Anode und Anolyt und Kathodenraum mit Kathode, wobei bei mehreren Reaktionsräumen ein Reaktionsraum jeweils mit vorhandenen weiteren baugleichen Reaktionsräumen strömungsparallel geschalten ist
mit den Schritten
a) Durchleiten des Förderstroms mit einem Druck von 1 bis 100 bar und/oder einer Temperatur von 10 bis 200 °C durch den Kathodenraum der elektrochemischen Abscheidevorrichtung
i) des Reaktionsraums mit noch unbeladener Kathode oder
ii) mindestens eines Reaktionsraums mit noch unbeladener Kathode, wobei jedoch mindestens ein Reaktionsraum nicht durchströmt wird
b) Anlegen eines regelbaren elektrischen Stroms mit einer Stromdichte von 0,01 - 10 mA/cm² an die elektrochemische Abscheidevorrichtung im durchströmten Reaktionsraum, wobei die in dem Förderstrom enthaltenen Metalle und/oder Halbmetalle und / oder Nichtmetalle reduziert und in metallischer oder mineralischer Form auf der Kathode abgeschieden werden und diese beladen,
c)
i) Unterbrechung des Förderstroms, wenn die Kathode beladen ist oder
ii) Umleitung des Förderstroms, wenn die Kathode beladen ist, in mindestens einen nächsten Reaktionsraum mit noch unbeladener Kathode, und Durchleiten des Förderstroms durch den Kathodenraum des mindestens einen nächsten Reaktionsraums mit noch unbeladener Kathode und darin Wiederholung von Schritt b)
d) Regenerierung des in den Schritten a) und b) durchströmten Reaktionsraums durch Entfernung der auf dessen Kathodenmaterial abgeschiedenen Metalle und/oder Halbmetalle und / oder Nichtmetalle durch
d.1) Ausbringung des beladenen Kathodenmaterials inklusive der abgeschiedenen Metalle und/oder Metalloide aus dem Kathodenraum und Hinzufügen neuen Kathodenmaterials
oder
d.2) Regenerierung des Kathodenmaterials durch Schalten des beladenen Kathodenmaterials als Anode und dessen Behandlung mit einer Mineralsäurelösung, wobei die dabei gewonnene Lösung, enthaltend die gelösten Metalle und/oder Halbmetalle und/oder Nichtmetalle über eine Injektionsbohrung zurück in das Reservoir verbracht wird oder wobei dabei gewonnene Lösung entnommen wird und die Metalle und/oder Halbmetalle und/oder Nichtmetalle durch galvanische Abscheidung oder flüssig-flüssig-Extraktion gewonnen werden,
wobei Anoden- und Kathodenraum jeweils durch eine Anionen- oder Kationenaustauschermembran oder einen porösen Separator voneinander getrennt sind, und wobei der Anolyt eine wässrige Lösung anorganischer und/oder organischer oxidierbarer Verbindungen mit einem Redoxpotential unter dem des Redoxsystems Cl⁻ /Cl₂ ist, sodass die Bildung von Chlorgas unterdrückt wird, wobei die oxidierbaren Verbindungen während der Abscheidung anodisch oxidiert werden, wobei der Anolyt in einem separaten Kreislauf geführt wird und regeneriert wird, wenn alle oxidierbaren Verbindungen oxidiert sind, wobei die Vorrichtung obertägig oder untertägig in den Förderstrom geschalten ist.

2. Verfahren nach Anspruch 1, **dadurch gekennzeichnet, dass** die reduzierbaren Metall- und/oder Halbmetall- und/oder Nichtmetallionen ausgewählt sind aus positiv geladenen Ionen der chemischen Elemente Ga, In, Tl, Ge, Sn, Pb, As, Sb, Bi, Se, Te, Po, den Sauerstoff enthaltenden Ionen der chemischen Elemente der Gruppe VII des PSE, den Ionen der chemischen Elemente der Gruppen VIb, VIIb, VIIIb, Ib und IIb sowie den Ionen des Urans.

3. Verfahren einem der Ansprüche 1 oder 2, **gekennzeichnet dadurch, dass** eine Kathode in Form eines Blechs in ebener Geometrie, hohlen Zylinder, Röhre, Granulats, Gewebes, Drahtgeflechts und/oder dreidimensionalen Netzwerks von Metallfilamenten verwendet wird.

4. Verfahren nach Anspruch 3, **dadurch gekennzeichnet, dass** das Granulat in sphärischer Geometrie vorliegt, ausgewählt aus Zylinder, Rotationsellipsoid und/oder Kugel, wobei die Granulate auch hohl sein können.

5. Verfahren nach einem der Ansprüche 1 bis 4, **dadurch gekennzeichnet, dass** Schritt c) durchgeführt wird, wenn die Kathodenbeladung so hoch ist, dass der Druck in der elektrochemischen Abscheidevorrichtung eine Druckdifferenz zum Druck vor Beginn der Abscheidung von 0,3 bis 2 bar aufweist.

6. Vorrichtung zur kontinuierlichen elektrochemischen Abtrennung radioaktiver, toxischer und Scales-bildender reduzierbarer Metall- und/oder Halbmetall- und/oder Nichtmetallionen aus Geothermalfluid- oder Formationswasser-Förderströmen, umfassend:
i) einen Reaktionsraum oder
ii) mehrere Reaktionsräume zur galvanischen Abscheidung
wobei in ii) ein Reaktionsraum mit vorhandenen weiteren baugleichen Reaktionsräumen strömungsparallel schaltbar ist
wobei jeder Reaktionsraum
- einen Zu- und -Ablauf,
- eine druck- und temperaturbeständige elektrochemische Abscheidevorrichtung mit je einem Anodenraum mit Anode und Anolyt und einem Kathodenraum mit Kathode
und
- eine regelbare Stromquelle an jeder elektrochemischen Abscheidevorrichtung, die so ausgelegt ist, dass damit unabhängig voneinander und regelbar an jede elektrochemischen Abscheidevorrichtung ein elektrischer Strom mit einer Stromdichte von 0,01 bis 10 mA/cm² angelegt werden kann,
umfasst,
wobei die einzelnen Zu- und Abläufe unabhängig voneinander geöffnet und geschlossen werden können, wobei der Zulauf eines Reaktionsraums in dessen Kathodenraum führt und der Kathodenraum einen Ablauf enthält, aus dem der Förderstrom wieder austritt, wobei Anoden- und Kathodenraum jeweils durch eine Anionen- oder Kationenaustauschermembran oder einen porösen Separator voneinander getrennt sind, wobei der Anodenraum über einen separaten Zu- und Ablauf verfügt, wobei im Anodenraum ein Anolyt aus einer wässrigen Lösung anorganischer und/oder organischer oxidierbarer Verbindungen vorgelegt ist, mit einem Redoxpotential unter dem des Redoxsystems Cl⁻/Cl₂, wobei jeder Reaktionsraum so ausgelegt ist, dass der Förderstrom mit einem Druck 1 bis 100 bar und/oder einer Temperatur von 10 bis 300 °C und/oder einem Volumenstrom von 10 bis 100 m³ / h durch den Kathodenraum durchgeleitet und aufbereitet werden kann, wobei die Vorrichtung obertägig oder untertägig in den Förderstrom geschalten ist.

7. Vorrichtung nach Anspruch 6, **gekennzeichnet dadurch, dass** die Erscheinungsform der Kathode ausgewählt ist aus Blech in ebener Geometrie, hohler Zylinder bzw. röhrenförmig, Granulat, Gewebe, Drahtgeflecht und/oder dreidimensionales Netzwerk von Metallfilamenten.

8. Vorrichtung nach Anspruch 7, **dadurch gekennzeichnet, dass** das Granulat in sphärischer Geometrie vorliegt, ausgewählt aus Zylinder, Rotationsellipsoid und/oder Kugel, wobei die Granulate auch hohl sein können.

9. Vorrichtung nach Anspruch 7 oder 8, **dadurch gekennzeichnet, dass** der Durchmesser des Granulats 0.5 bis 10 mm beträgt.

10. Vorrichtung nach einem der Ansprüche 6 bis 9, **dadurch gekennzeichnet, dass** die Anode eine Verbundanode ist, bestehend aus einem chemisch inerten, leitfähigen Trägermaterial, beschichtet mit einer Schicht Anodenmaterial, ausgewählt aus Metallen der Gruppe VIIIb des PSE und/oder deren Oxiden und/oder ihren Legierungen untereinander oder aus Allotropen des Kohlenstoffs, aus Bleidioxid, aus Silciumcarbid, aus Titannitrid, Titanborid, aus Chrom, Molybdän, Wolfram, Niob und/oder Tantal und/oder aus Nickel- oder Cobaltbasislegierungen mit einer Schichtdicke von 0,1 bis 100 µm.

11. Vorrichtung nach einem der Ansprüche 6 bis 10, **dadurch gekennzeichnet, dass** der poröse Separator aus porösem Kunststoff und/oder porösem keramischen Material mit einer mittleren Porenweite von 0.01 bis 250 µm besteht und eine Dicke von 0.5 bis 10 mm aufweist.

12. Vorrichtung nach einem der Ansprüche 6 bis 11, **dadurch gekennzeichnet, dass** im Kathodenraum mindestens eine Sonotrode mit einer Leistungsaufnahme von 0,01 - 10 kW angeordnet ist, die in Intervallen zugeschaltet werden kann.

13. Vorrichtung nach einem der Ansprüche 6 bis 12, **dadurch gekennzeichnet, dass** sich im untersten Teil des Kathodenraums von Flüssigkeiten durchströmbare Schleusenvorrichtungen befinden und dass sich die durchströmbaren Schleusenvorrichtungen zu einem mit einem Blendenbauteil abgegrenzten side-track des Bohrlochs öffnen lassen.

14. Vorrichtung nach einem der Ansprüche 6 bis 13, **dadurch gekennzeichnet, dass** die Vorrichtung untertägig oberhalb der Förderpumpe im Ringraum der Förderbohrung angeordnet ist.

## Claims

1. A method for the treatment of geothermal fluid or formation water streams before their energetic use or transfer into the environment by continuous, electrochemical separation of radioactive, toxic and scale-forming reducible metal and/or semi-metal and/or non-metal ions from the stream by means of an apparatus for galvanic deposition with i) one or ii) several reaction spaces, each comprising a pressure- and/or temperature-resistant electrochemical deposition device consisting of anode space with anode and anolyte and cathode space with cathode, wherein in several reaction spaces, one reaction space each with existing further identical reaction spaces is connected in parallel with the stream, with the following steps:
a) passing the stream with a pressure of 1 to 100 bar and/or a temperature of 10 to 200°C through the cathode space of the electrochemical deposition device
i) of the reaction space with the cathode still unloaded or
ii) of at least one reaction space with the cathode still unloaded, wherein at least one reaction space is not flowed through
b) applying a controllable electrical current with a current density of 0.01-10 mA/cm² to the electrochemical deposition device in the flowed-through reaction space, wherein the metals and/or semi-metals and/or non-metals contained in the stream are reduced and deposited in metallic or mineral form on the cathode and load the latter,
c)
i) interruption of the stream when the cathode is loaded or
ii) redirecting the stream when the cathode is loaded into at least one next reaction space with the cathode still unloaded, and passing the stream through the cathode space of the at least one next reaction space with the cathode still unloaded and repeating step b) therein
d) regeneration of the reaction space flowed through in steps a) and b) by removal of the metals and/or semi-metals and/or non-metals deposited on its cathode material by
d.1) removing the loaded cathode material including the deposited metals and/or metalloids from the cathode space and adding new cathode material or
d.2) regeneration of the cathode material by switching the loaded cathode material as an anode and treating it with a mineral acid solution, wherein the solution obtained, containing the dissolved metals and/or semi-metals and/or non-metals, is brought back into the reservoir via an injection bore, or wherein solution thereby obtained is removed and the metals and/or semi-metals and/or non-metals are obtained by galvanic deposition or liquid-liquid extraction,
wherein the anode and cathode spaces are each separated by an anion or cation exchange membrane or a porous separator, and the anolyte is an aqueous solution of inorganic and/or organic oxidizable compounds with a redox potential below that of the redox system Cl⁻/Cl₂, so that the formation of chlorine gas is suppressed, wherein the oxidizable compounds are anodically oxidized during the deposition, wherein the anolyte is conducted in a separate circuit and regenerated when all the oxidizable compounds have been oxidized, wherein the apparatus is connected to the stream above or below ground.

2. The method according to claim 1, **characterized in that** the reducible metal and/or semi-metal and/or non-metal ions are selected from positively charged ions of the chemical elements Ga, In, Tl, Ge, Sn, Pb, As, Sb, Bi, Se, Te, Po, the oxygen-containing ions of the chemical elements of group VII of the PSE, the ions of the chemical elements of groups Vlb, Vllb, Vlllb, Ib and IIb and the ions of uranium.

3. The method according to any one of claims 1 or 2, **characterized in that** a cathode in the form of a sheet in flat geometry, hollow cylinder, tube, granules, fabric, wire mesh and/or three-dimensional network of metal filaments is used.

4. The method according to claim 3, **characterized in that** the granules are in spherical geometry, selected from cylinder, rotation ellipsoid and/or sphere, wherein the granules may also be hollow.

5. The method according to any one of claims 1 to 4, **characterized in that** step c) is carried out when the cathode load is so high that the pressure in the electrochemical deposition apparatus has a pressure difference from the pressure before the start of the deposition of 0.3 to 2 bar.

6. An apparatus for the continuous electrochemical separation of radioactive, toxic and scale-forming reducible metal and/or semi-metal and/or non-metal ions from geothermal fluid or formation water streams, comprising:
i) one reaction space or
ii) several reaction spaces for galvanic deposition, wherein in ii) a reaction space with existing further identical reaction spaces is connectable in parallel with the stream, wherein each reaction space comprises
- an inlet and outlet,
- a pressure- and temperature-resistant electrochemical deposition device, each with an anode space with anode and anolyte and a cathode space with cathode and
- a controllable current source to each electrochemical deposition device which is designed so that an electric current with a current density of 0.01 to 10 mA/cm² can be applied independently and adjustably to each electrochemical deposition device,
wherein the individual inlets and outlets can be opened and closed independently of one another, wherein the inlet of a reaction space leads into its cathode space and the cathode space contains an outlet from which the stream emerges again, wherein the anode and cathode spaces each are separated from one another by an anion or cation exchange membrane or a porous separator, wherein the anode space has a separate inlet and outlet, wherein an anolyte from an aqueous solution of inorganic and/or organic oxidizable compounds is placed in the anode space, with a redox potential below that of the redox system Cl⁻/Cl₂, wherein each reaction space is designed so that the stream can be passed through the cathode space and processed with a pressure of 1 to 100 bar and/or a temperature of 10 to 300°C and/or a volume flow of 10 to 100 m³/h, wherein the apparatus is connected to the flow above ground or underground.

7. The apparatus according to claim 6, **characterized in that** the appearance of the cathode is selected from sheet metal in a flat geometry, hollow cylinder or tubular, granules, fabric, wire mesh and/or three-dimensional network of metal filaments.

8. The apparatus according to claim 7, **characterized in that** the granules are present in a spherical geometry, selected from cylinder, rotation ellipsoid and/or sphere, wherein the granules may also be hollow.

9. The apparatus according to claim 7 or 8, **characterized in that** the diameter of the granules is 0.5 to 10 mm.

10. The apparatus according to any one of claims 6 to 9, **characterized in that** the anode is a composite anode, consisting of a chemically inert, conductive carrier material, coated with a layer of anode material, selected from metals of group Vlllb of the PSE and/or their oxides and/or their alloys with each other or from allotropes of carbon, from lead dioxide, from silicon carbide, from titanium nitride, titanium boride, from chromium, molybdenum, tungsten, niobium and/or tantalum and/or from nickel or cobalt-based alloys with a layer thickness of 0.1 to 100 µm.

11. The apparatus according to any one of claims 6 to 10, **characterized in that** the porous separator consists of porous plastic and/or porous ceramic material with an average pore size of 0.01 to 250 µm and has a thickness of 0.5 to 10 mm.

12. The apparatus according to any one of claims 6 to 11, **characterized in that** at least one sonotrode with a power consumption of 0.01-10 kW is arranged in the cathode space, which can be switched on at intervals.

13. The apparatus according to any one of claims 6 to 12, **characterized in that** there are lock devices through which liquids can flow in the lowermost part of the cathode space and **in that** the lock devices through which the stream can flow can be opened to form a side track of the borehole delimited by a panel component.

14. The apparatus according to any one of claims 6 to 13, **characterized in that** the device is arranged underground above the feed pump in the annular space of the supply bore.

## Revendications

1. Procédé de traitement de flux de transport de fluide géothermique ou d'eau de formation avant leur utilisation énergétique ou leur acheminement dans l'environnement, par séparation électrochimique continue d'ions métalliques et/ou métalloïdes et/ou non-métalliques, radioactifs, toxiques et entartrants du flux de transport, au moyen d'un dispositif de dépôt galvanique,, lesquels ions étant réductibles, ledit dispositif de dépôt galvanique comporte i) une ou ii) plusieurs chambres de réaction, comprenant chacune un dispositif de dépôt électrochimique résistant à la pression et/ou à la température, composé d'une chambre anodique à anode et à anolyte et d'une chambre cathodique à cathode, une chambre de réaction étant montée en parallèle en écoulement à d'autres chambres de réaction existantes de structure similaire s'il existe plusieurs chambres de réaction, le procédé comprenant les étapes consistant à
a) faire circuler le flux de transport à une pression comprise entre 1 et 100 bars et/ou à une température comprise entre 10 et 200 °C dans la chambre cathodique du dispositif de dépôt électrochimique
i) de la chambre de réaction comportant une cathode non encore chargée, ou
ii) d'au moins une chambre de réaction comportant une cathode non encore chargée, au moins une chambre de réaction n'étant cependant pas traversée par le flux
b) appliquer un courant électrique régulable présentant une densité de courant comprise entre 0,01 et 10 mA/cm² au dispositif de dépôt électrochimique dans la chambre de réaction traversée par le flux, les métaux et/ou les métalloïdes et/ou les non métaux contenus dans le flux de transport étant réduits et déposés sous forme métallique ou minérale sur la cathode, et chargeant celle-ci,
c)
i) interrompre le flux de transport lorsque la cathode est chargée ou
ii) dévier le flux de transport, lorsque la cathode est chargée, vers au moins une chambre de réaction suivante comportant une cathode non chargée, et à faire circuler le flux de transport dans la chambre cathodique de l'au moins une chambre de réaction suivante comportant une cathode non encore chargée, et y répéter l'étape b)
d) régénérer la chambre de réaction traversée par le flux aux étapes a) et b) par l'élimination des métaux et/ou des métalloïdes et/ou des non métaux déposés sur son matériau de cathode, par
d.1) retrait du matériau de cathode chargé, y compris des métaux et/ou métalloïdes déposés, de la chambre cathodique, et par ajout d'un nouveau matériau de cathode, ou par
d.2) régénération du matériau de cathode par commutation du matériau de cathode chargé comme anode et par traitement de celui-ci à l'aide d'une solution d'acide minéral, la solution ainsi obtenue, contenant les métaux et/ou les métalloïdes et/ou les non métaux dissous, étant renvoyée dans le réservoir par l'intermédiaire d'un forage d'injection, ou la solution ainsi obtenue étant éliminée et les métaux et/ou les métalloïdes et/ou les non métaux étant obtenus par dépôt galvanique ou par extraction liquide-liquide,
les chambres anodique et cathodique étant respectivement séparées par une membrane échangeuse d'anions ou de cations ou par un séparateur poreux, et l'anolyte étant une solution aqueuse de composés inorganiques et/ou organiques oxydables à potentiel d'oxydo-réduction inférieur au système redox Cl⁻/Cl₂, de manière à empêcher la formation de chlore gazeux, les composés oxydables étant oxydés par voie anodique pendant le dépôt, l'anolyte étant mis en circulation dans un circuit séparé et étant régénéré lorsque tous les composés oxydables sont oxydés, le dispositif étant monté dans le flux de transport, à la surface ou sous la surface du sol.

2. Procédé selon la revendication 1, **caractérisé en ce que** les ions métalliques et/ou métalloïdes et/ou non-métalliques réductibles sont choisis parmi les ions des éléments chimiques Ga, In, Tl, Ge, Sn, Pb, As, Sb, Bi, Se, Te, Po, lesquels ions sont chargés positivement, les ions des éléments chimiques du groupe VII du PSE, lesquels ions contiennent de l'oxygène, les ions des éléments chimiques des groupes VIb, VIIb, VIIIb, Ib et IIb, et les ions de l'uranium.

3. Procédé selon l'une des revendications 1 ou 2, **caractérisé en ce que** l'on utilise une cathode sous forme de tôle à géométrie plane, de cylindre creux, de tube, de granulés, de tissu, de treillis métallique et/ou de réseau tridimensionnel de filaments métalliques.

4. Procédé selon la revendication 3, **caractérisé en ce que** les granulés présentent une géométrie sphérique choisie parmi un cylindre, un ellipsoïde rotatif et/ou une sphère, les granulés pouvant également être creux.

5. Procédé selon l'une des revendications 1 à 4, **caractérisé en ce que** l'étape c) est réalisée lorsque la charge de cathode est si élevée que la pression dans le dispositif de dépôt électrochimique présente une différence de pression, par rapport à la pression avant le début du dépôt, comprise entre 0,3 et 2 bars.

6. Dispositif de séparation électrochimique continue d'ions métalliques et/ou métalloïdes et/ou non-métalliques, radioactifs, toxiques et entartrants du flux de transport de fluide géothermique ou d'eau de formation, lesquels ions sont réductibles, le dispositif comprenant :
i) une chambre de réaction ou
ii) plusieurs chambres de réaction pour le dépôt galvanique, dont une chambre de réaction pouvant être montée dans ii), en parallèle en écoulement à d'autres chambres de réaction existantes de structure similaire, chaque chambre de réaction comprenant
- une entrée et une sortie,
- un dispositif de dépôt électrochimique résistant à la pression et à la température, comportant une chambre anodique à anode et anolyte et une chambre cathodique à cathode, respectivement
et
- une source de courant régulable au niveau de chaque dispositif de dépôt électrochimique, conçue de manière à permettre d'appliquer de manière indépendante et régulable à chaque dispositif de dépôt électrochimique, un courant électrique présentant une densité de courant comprise entre 0,01 et 10 mA/cm²,
dans lequel
les différentes entrées et sorties peuvent être ouvertes et fermées indépendamment les unes des autres, l'entrée d'une chambre de réaction conduit dans sa chambre cathodique et la chambre cathodique comporte une sortie d'où ressort le flux de transport, les chambres anodique et cathodique étant respectivement séparées par une membrane échangeuse d'anions ou de cations ou par un séparateur poreux, la chambre anodique comportant une entrée et une sortie séparées, un anolyte constitué d'une solution aqueuse de composés inorganiques et/ou organiques oxydables étant présent dans la chambre anodique, lesdits composés ayant un potentiel d'oxydo-réduction inférieur au système redox Cl⁻/Cl₂, chaque chambre de réaction étant conçue de telle manière que le flux de transport puisse être acheminé et traité dans la chambre cathodique à une pression comprise entre 1 à 100 bars et/ou à une température comprise entre 10 et 300 °C et/ou à un débit volumique compris entre 10 et 100 m³/h, le dispositif étant monté dans le flux de transport, à la surface ou sous la surface du sol.

7. Dispositif selon la revendication 6, **caractérisé en ce que** l'aspect de la cathode est choisi parmi une tôle à géométrie plane, un cylindre creux ou tubulaire, des granulés, un tissu tissé, un treillis métallique et/ou un réseau tridimensionnel de filaments métalliques.

8. Dispositif selon la revendication 7, **caractérisé en ce que** les granulés présentent une géométrie sphérique choisie parmi un cylindre, un ellipsoïde rotatif et/ou une sphère, les granulés pouvant également être creux.

9. Dispositif selon la revendication 7 ou 8, **caractérisé en ce que** le diamètre des granulés est compris entre 0,5 et 10 mm.

10. Dispositif selon l'une des revendications 6 à 9, **caractérisé en ce que** l'anode est une anode composite constituée d'un matériau de support conducteur chimiquement inerte, revêtu d'une couche de matériaux anodiques choisis parmi des métaux du groupe VIIIb du PSE et/ou leurs oxydes et/ou leurs alliages, ou parmi des allotropes du carbone, le dioxyde de plomb, le carbure de silicium, le nitrure de titane, le borure de titane, le chrome, le molybdène, le tungstène, le niobium et/ou le tantale et/ou les alliages à base de nickel ou de cobalt ayant une épaisseur de couche comprise entre 0,1 et 100 µm.

11. Dispositif selon l'une des revendications 6 à 10, **caractérisé en ce que** le séparateur poreux est constitué d'une matière plastique poreuse et/ou d'une matière céramique poreuse ayant une largeur de pores moyenne comprise entre 0,01 et 250 µm et une épaisseur comprise entre 0,5 et 10 mm.

12. Dispositif selon l'une des revendications 6 à 11, **caractérisé en ce qu'**au moins une sonotrode d'une puissance absorbée comprise entre 0,01 et 10 kW est disposée dans la chambre cathodique, laquelle sonotrode peut être mise en marche par intervalles.

13. Dispositif selon l'une des revendications 6 à 12, **caractérisé en ce que** des dispositifs d'écluse pouvant être traversés par des liquides se trouvent dans la partie la plus basse de la chambre cathodique, et **en ce que** les dispositifs d'écluse pouvant être traversés peuvent s'ouvrir pour former une voie latérale du trou de forage délimitée par un composant obturateur.

14. Dispositif selon l'une des revendications 6 à 13, **caractérisé en ce que** le dispositif est disposé sous la surface du sol au-dessus de la pompe de transport dans l'espace annulaire du forage de transport.
